(19) **Europäisches Patentamt / European Patent Office / Office européen des brevets**

(11) **EP 4 518 564 A1**

(12) **EUROPEAN PATENT APPLICATION**
published in accordance with Art. 153(4) EPC

(43) Date of publication:
05.03.2025 Bulletin 2025/10

(21) Application number: 23796844.1

(22) Date of filing: 27.04.2023

(51) International Patent Classification (IPC):
$H04W\ 76/18^{(2018.01)}$ $\quad$ $H04W\ 24/08^{(2009.01)}$
$H04W\ 24/10^{(2009.01)}$ $\quad$ $H04W\ 36/00^{(2009.01)}$
$H04W\ 40/22^{(2009.01)}$ $\quad$ $H04W\ 88/04^{(2009.01)}$
$H04W\ 76/19^{(2018.01)}$ $\quad$ $H04W\ 92/10^{(2009.01)}$
$H04W\ 92/18^{(2009.01)}$

(52) Cooperative Patent Classification (CPC):
H04W 24/08; H04W 24/10; H04W 36/00;
H04W 40/22; H04W 76/18; H04W 76/19;
H04W 88/04; H04W 92/10; H04W 92/18

(86) International application number:
PCT/KR2023/005784

(87) International publication number:
WO 2023/211202 (02.11.2023 Gazette 2023/44)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:
27.04.2022 KR 20220052276
06.05.2022 KR 20220056276
10.05.2022 KR 20220057350
28.07.2022 KR 20220094129
14.12.2022 KR 20220175063

(71) Applicant: **LG Electronics Inc.**
**Yeongdeungpo-gu**
**Seoul 07336 (KR)**

(72) Inventors:
- **BACK, Seoyoung**
  **Seoul 06772 (KR)**
- **LEE, Seungmin**
  **Seoul 06772 (KR)**
- **PARK, Giwon**
  **Seoul 06772 (KR)**

(74) Representative: **Plasseraud IP**
**104 Rue de Richelieu**
**CS92104**
**75080 Paris Cedex 02 (FR)**

(54) **OPERATION METHOD OF UE RELATED TO RLF IN MULTI-PATH RELAY IN WIRELESS COMMUNICATION SYSTEM**

(57) An embodiment relates to an operation method of a remote user equipment (UE) in a wireless communication system, in which: the remote UE establishes a radio resource control (RRC) connection to a base station; the remote UE establishes a PC5 RRC connection to a relay UE; and the remote UE transmits data to the base station through one path among i) a first path for direct data transmission to the base station and ii) a second path for data transmission to the base station via the relay UE, wherein, on the basis of a radio link failure (RLF) being detected in one path among the first path and the second path, the remote UE reports the RLF to the base station via a message based on a sidelink signaling radio bearer through the path in which the RLF is not detected.

FIG. 15

Establish RRC with BS — S1501

Establish PC5 connection with relay UE — S1502

Transmit data to BS via one path of i) first path for transmitting data directly to BS or ii) second path for transmitting data to BS via relay UE — S1503

**Description**

**TECHNICAL FIELD**

The following description relates to a wireless communication system, and more particularly, to a method and device for operating a remote user equipment (UE) or a relay UE when radio link failure (RLF) is detected in a multi-path relay.

**BACKGROUND**

Wireless communication systems are being widely deployed to provide various types of communication services such as voice and data. In general, a wireless communication system is a multiple access system capable of supporting communication with multiple users by sharing available system resources (bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system, and a multi carrier frequency division multiple access (MC-FDMA) system.

A wireless communication system uses various radio access technologies (RATs) such as long term evolution (LTE), LTE-advanced (LTE-A), and wireless fidelity (WiFi). 5th generation (5G) is such a wireless communication system. Three key requirement areas of 5G include (1) enhanced mobile broadband (eMBB), (2) massive machine type communication (mMTC), and (3) ultra-reliable and low latency communications (URLLC). Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is augmented reality (AR) for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control and coordination, and so on.

Now, multiple use cases will be described in detail.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost- and energy-efficient maintenance of the city or home. A similar setup can be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G.

Finally, logistics and freight tracking are important use cases for mobile communications that enable the tracking of inventory and packages wherever they are by using location-based information systems. The logistics and freight tracking use cases typically require lower data rates but need wide coverage and reliable location information.

A wireless communication system is a multiple access system that supports communication of multiple users by sharing available system resources (a bandwidth, transmission power, etc.). Examples of multiple access systems include a CDMA system, an FDMA system, a TDMA system, an OFDMA system, an SC-FDMA system, and an MC-FDMA system.

Sidelink (SL) refers to a communication scheme in which a direct link is established between user equipments (UEs) and the UEs directly exchange voice or data without intervention of a base station (BS). SL is considered as a solution of relieving the BS of the constraint of rapidly growing data traffic.

Vehicle-to-everything (V2X) is a communication technology in which a vehicle exchanges information with another vehicle, a pedestrian, and infrastructure by wired/wireless communication. V2X may be categorized into four types: vehicle-to-vehicle (V2V), vehicle-to-infrastructure (V2I), vehicle-to-network (V2N), and vehicle-to-pedestrian (V2P). V2X communication may be provided via a PC5 interface and/or a Uu interface.

As more and more communication devices demand larger communication capacities, there is a need for enhanced mobile broadband communication relative to existing RATs. Accordingly, a communication system is under discussion, for which services or UEs sensitive to reliability and latency are considered. The next-generation RAT in which eMBB, MTC, and URLLC are considered is referred to as new RAT or NR. In NR, V2X communication may also be supported.

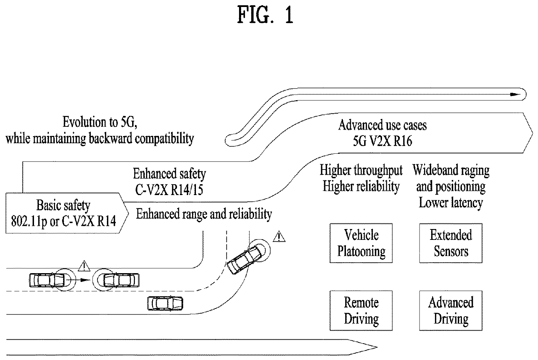

FIG. 1 is a diagram illustrating V2X communication based on pre-NR RAT and V2X communication based on NR in comparison.

For V2X communication, a technique of providing safety service based on V2X messages such as basic safety message (BSM), cooperative awareness message (CAM), and decentralized environmental notification message (DENM) was mainly discussed in the pre-NR RAT. The V2X message may include location information, dynamic information, and attribute information. For example, a UE may transmit a CAM of a periodic message type and/or a DENM of an event-triggered type to another UE.

For example, the CAM may include basic vehicle information including dynamic state information such as a direction and a speed, vehicle static data such as dimensions, an external lighting state, path details, and so on. For example, the UE may broadcast the CAM which may have a latency less than 100 ms. For example, when an unexpected incident occurs, such as breakage or an accident of a vehicle, the UE may generate the DENM and transmit the DENM to another UE. For example, all vehicles within the transmission range of the UE may receive the CAM and/or the DENM. In this case, the DENM may have priority over the CAM.

In relation to V2X communication, various V2X scenarios are presented in NR. For example, the V2X scenarios include vehicle platooning, advanced driving, extended sensors, and remote driving.

For example, vehicles may be dynamically grouped and travel together based on vehicle platooning. For example, to perform platoon operations based on vehicle platooning, the vehicles of the group may receive periodic data from a leading vehicle. For example, the vehicles of the group may widen or narrow their gaps based on the periodic data.

For example, a vehicle may be semi-automated or full-automated based on advanced driving. For example, each vehicle may adjust a trajectory or maneuvering based on data obtained from a nearby vehicle and/or a nearby logical entity. For example, each vehicle may also share a dividing intention with nearby vehicles.

Based on extended sensors, for example, raw or processed data obtained through local sensor or live video data may be exchanged between vehicles, logical entities, terminals of pedestrians and/or V2X application servers. Accordingly, a vehicle may perceive an advanced environment relative to an environment perceivable by its sensor.

Based on remote driving, for example, a remote driver or a V2X application may operate or control a remote vehicle on behalf of a person incapable of driving or in a dangerous environment. For example, when a path may be predicted as in public transportation, cloud computing-based driving may be used in operating or controlling the remote vehicle. For example, access to a cloud-based back-end service platform may also be used for remote driving.

A scheme of specifying service requirements for various V2X scenarios including vehicle platooning, advanced driving, extended sensors, and remote driving is under discussion in NR-based V2X communication.

## DISCLOSURE

### Technical Problem

The present disclosure provides a method for operating a remote user equipment (UE) or a relay UE when radio link failure (RLF) is detected in a multi-path relay.

### Technical Solution

According to an embodiment, operating method of a user equipment (UE) in a remote communication system includes establishing a radio resource control (RRC) connection with a base station (BS) by the remote UE, establishing a PC5 RRC connection with a relay UE by the remote UE, transmitting data to the BS via one path of i) a first path for transmitting data directly to the BS or ii) a second path for transmitting data to the BS via the relay UE, by the remote UE, wherein, based on detecting radio link failure (RLF) in either of the first path and the second path, the remote UE reports the RLF to the BS through a message based on a Sidelink Signaling Radio Bearer through a path in which the RLF is not detected.

According to an embodiment, in a remote communication system, a remote UE device includes at least one processor; and at least one computer memory operably connected to the at least one processor and storing instructions that, when executed, cause the at least one processor to perform operations, the operations including establishing a radio resource control (RRC) connection with a base station (BS), establishing a PC5 RRC connection with a relay UE, and transmitting data to the BS via one path of i) a first path for transmitting data directly to the BS or ii) a second path for transmitting data to the Bs via the relay UE, wherein the remote UE reports the RLF to the BS via a message based on a Sidelink Signaling Radio Bearer via a path on which the RLF is not detected, based on detecting a radio link failure (RLF) in one path of the first path and the second path.

The SRB may be SRB 1 and the message may be SidelinUEInformation.

The SRB may be SRB 3 and the message may be RRCReconfigurationRequest.

A cause value of the RRCReconfigurationRequest message may be Uu link RLF.

Both the first path and the second path may be activated.

The remote UE may transmit different data on the first path and the second path before detecting the RLF.

The remote UE may transmit all subsequent data of the different data through the path in which the RLF is not detected.

The remote UE may report the RLF of the Uu link to the gNB through the second path based on detecting the RLF of the Uu link related to the first path.

The remote UE may report the RLF of the sidelink to the gNB through the first path based on detecting the RLF of the sidelink related to the second path.

Based on the relay UE detecting the RLF of the Uu link, the remote UE may receive a notification message related to the RLF of the Uu link from the relay UE.

Based on reception of the notification message, the remote UE may transmit a message notifying the RLF of the Uu link to the gNB through the first path.

The remote UE may trigger relay re-selection based on reception of the notification message.

### Advantageous Effects

According to an embodiment, in a multi-path relay operation, when radio link failure (RLF) occurs in one path, this may be notified to a gNB through the other path, and thus the gNB may take appropriate action.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:

FIG. 1 is a diagram for explaining comparison between vehicle-to-everything (V2X) communication based on pre-new radio (NR) radio access technology (RAT) and V2X communication based on NR;

FIG. 2 illustrates the structure of a Long Term Evolution (LTE) system according to an embodiment of the present disclosure;

FIG. 3 illustrates radio protocol architectures for user and control planes according to an embodiment of the present disclosure;

FIG. 4 illustrates the structure of a new radio (NR) system according to an embodiment of the present disclosure;

FIG. 5 illustrates a functional division between a next generation radio access network (NG-RAN) and a fifth-generation core (5GC) according to an embodiment of the present disclosure;

FIG. 6 illustrates the structure of a radio frame of NR to which embodiment(s) are applicable;

FIG. 7 illustrates the structure of a slot in an NR frame according to an embodiment of the present disclosure;

FIG. 8 illustrates a radio protocol architecture for sidelink (SL) communication according to an embodiment of the present disclosure;

FIG. 9 illustrates a radio protocol architecture for SL communication according to an embodiment of the present disclosure;

FIG. 10 illustrates a synchronization source or synchronization reference of V2X according to an embodiment of the present disclosure;

FIG. 11 illustrates a procedure for a user equipment (UE) to perform V2X or SL communication depending on transmission modes according to an embodiment of the present disclosure;

FIG. 12 illustrates a procedure by which a UE performs path switching according to an embodiment of the present disclosure;

FIG. 13 illustrates a direct to indirect path switching;

FIGS. 14 and 15 are diagrams to explain an embodiment; and

FIGS. 16 to 22 are diagrams to explain various devices to which embodiment(s) are applicable.

### DETAILED DESCRIPTION

In various embodiments of the present disclosure, "/" and "," should be interpreted as "and/or". For example, "A/B" may mean "A and/or B". Further, "A, B" may mean "A and/or B". Further, "A/B/C" may mean "at least one of A, B and/or C". Further, "A, B, C" may mean "at least one of A, B and/or C".

In various embodiments of the present disclosure, "or" should be interpreted as "and/or". For example, "A or B" may include "only A", "only B", and/or "both A and B". In other words, "or" should be interpreted as "additionally or alternatively".

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA), or the like. IEEE 802.16m is an evolution of IEEE 802.16e, offering backward compatibility with an IRRR 802.16e-based system. UTRA is a part of universal mobile telecommunications system (UMTS). 3rd generation partnership project (3GPP) long term evolution (LTE) is a part of evolved UMTS (E-UMTS) using evolved UTRA (E-UTRA). 3GPP LTE employs OFDMA for downlink (DL) and SC-FDMA for uplink (UL). LTE-advanced (LTE-A) is an evolution of 3GPP LTE.

A successor to LTE-A, 5th generation (5G) new radio access technology (NR) is a new clean-state mobile communication system characterized by high performance, low latency, and high availability. 5G NR may use all available spectral resources including a low frequency band below 1 GHz, an intermediate frequency band between 1 GHz and 10 GHz, and a high frequency (millimeter) band of 24 GHz or above.

While the following description is given mainly in the context of LTE-A or 5G NR for the clarity of description, the technical idea of an embodiment of the present disclosure is not limited thereto.

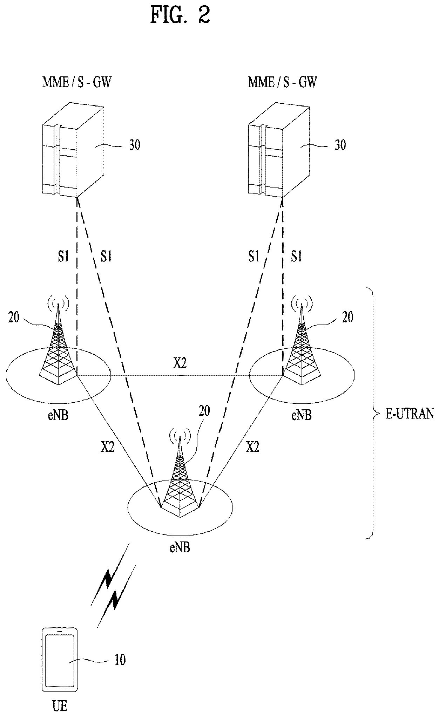

FIG. 2 illustrates the structure of an LTE system according to an embodiment of the present disclosure. This may also be called an evolved UMTS terrestrial radio access network (E-UTRAN) or LTE/LTE-A system.

Referring to FIG. 2, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communicating with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

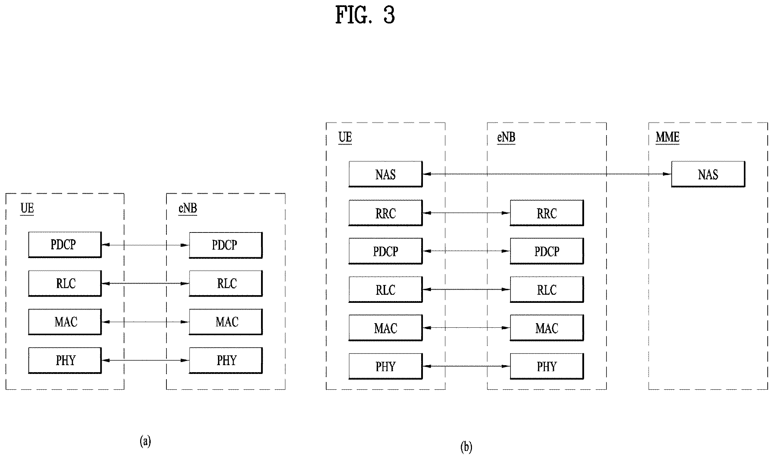

FIG. 3(a) illustrates a user-plane radio protocol architecture according to an embodiment of the disclosure.

FIG. 3(b) illustrates a control-plane radio protocol architecture according to an embodiment of the disclosure. A user plane is a protocol stack for user data transmission, and a control plane is a protocol stack for control signal transmission.

Referring to FIGS. 3(a) and 3(b), the PHY layer provides an information transfer service to its higher layer on physical channels. The PHY layer is connected to the medium access control (MAC) layer through transport channels and data is transferred between the MAC layer and the PHY layer on the transport channels. The transport channels are divided according to features with which data is transmitted via a radio interface.

Data is transmitted on physical channels between different PHY layers, that is, the PHY layers of a transmitter and a receiver. The physical channels may be modulated in orthogonal frequency division multiplexing (OFDM) and use time and frequencies as radio resources.

The MAC layer provides services to a higher layer, radio link control (RLC) on logical channels. The MAC layer provides a function of mapping from a plurality of logical channels to a plurality of transport channels. Further, the MAC layer provides a logical channel multiplexing function by mapping a plurality of logical channels to a single transport channel. A MAC sublayer provides a data transmission service on the logical channels.

The RLC layer performs concatenation, segmentation, and reassembly for RLC serving data units (SDUs). In order to guarantee various quality of service (QoS) requirements of each radio bearer (RB), the RLC layer provides three operation modes, transparent mode (TM), unacknowledged mode (UM), and acknowledged Mode (AM). An AM RLC provides error correction through automatic repeat request (ARQ).

The RRC layer is defined only in the control plane and controls logical channels, transport channels, and physical channels in relation to configuration, reconfiguration, and release of RBs. An RB refers to a logical path provided by L1 (the PHY layer) and L2 (the MAC layer, the RLC layer, and the packet data convergence protocol (PDCP) layer), for data transmission between the UE and the network.

The user-plane functions of the PDCP layer include user data transmission, header compression, and ciphering. The control-plane functions of the PDCP layer include control-plane data transmission and ciphering/integrity protection.

RB establishment amounts to a process of defining radio protocol layers and channel features and configuring specific parameters and operation methods in order to provide a specific service. RBs may be classified into two types, signaling radio bearer (SRB) and data radio bearer (DRB). The SRB is used as a path in which an RRC message is transmitted on the control plane, whereas the DRB is used as a path in which user data is transmitted on the user plane.

Once an RRC connection is established between the RRC layer of the UE and the RRC layer of the E-UTRAN, the UE is placed in RRC_CONNECTED state, and otherwise, the UE is placed in RRC_IDLE state. In NR, RRC_INACTIVE state is additionally defined. A UE in the RRC_INACTIVE state may maintain a connection to a core network, while releasing a connection from an eNB.

DL transport channels carrying data from the network to the UE include a broadcast channel (BCH) on which system information is transmitted and a DL shared channel (DL SCH) on which user traffic or a control message is transmitted. Traffic or a control message of a DL multicast or broadcast service may be transmitted on the DL-SCH or a DL multicast channel (DL MCH). UL transport channels carrying data from the UE to the network include a random access channel (RACH) on which an initial control message is transmitted and an UL shared channel (UL SCH) on which user traffic or a control message is transmitted.

The logical channels which are above and mapped to the transport channels include a broadcast control channel (BCCH), a paging control channel (PCCH), a common control channel (CCCH), a multicast control channel (MCCH), and a multicast traffic channel (MTCH).

A physical channel includes a plurality of OFDM symbol in the time domain by a plurality of subcarriers in the frequency domain. One subframe includes a plurality of OFDM symbols in the time domain. An RB is a resource allocation unit defined by a plurality of OFDM symbols by a plurality of subcarriers. Further, each subframe may use specific subcarriers of specific OFDM symbols (e.g., the first OFDM symbol) in a corresponding subframe for a physical DL control channel (PDCCH), that is, an L1/L2 control channel. A transmission time interval (TTI) is a unit time for subframe transmission.

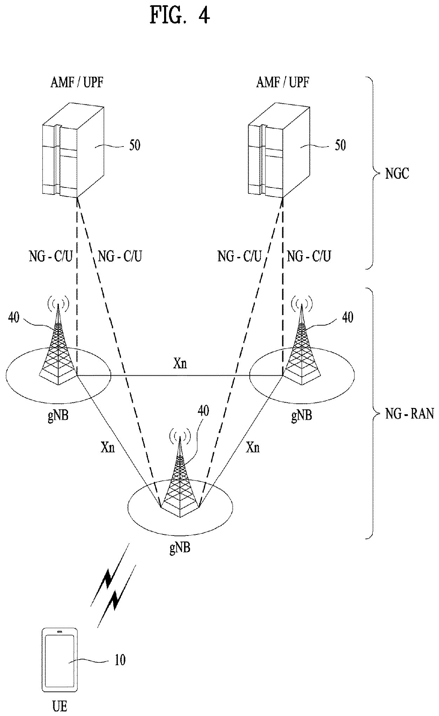

FIG. 4 illustrates the structure of an NR system according to an embodiment of the present disclosure.

Referring to FIG. 4, a next generation radio access network (NG-RAN) may include a next generation Node B (gNB) and/or an eNB, which provides user-plane and control-plane protocol termination to a UE. In FIG. 4, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

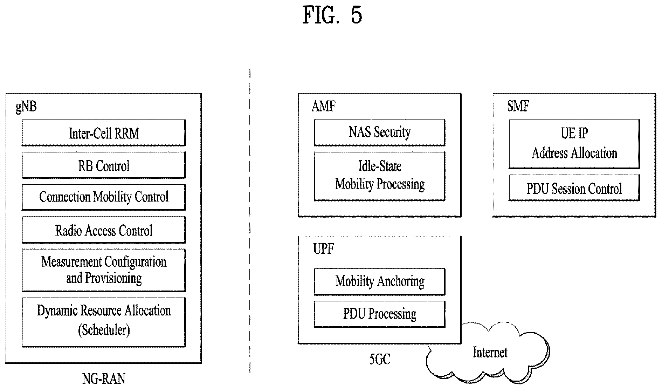

FIG. 5 illustrates functional split between the NG-RAN and the 5GC according to an embodiment of the present disclosure.

Referring to FIG. 5, a gNB may provide functions including inter-cell radio resource management (RRM), radio admission control, measurement configuration and provision, and dynamic resource allocation. The AMF may provide functions such as non-access stratum (NAS) security and idle-state mobility processing. The UPF may provide functions including mobility anchoring and protocol data unit (PDU) processing. A session management function (SMF) may provide functions including UE Internet protocol (IP) address allocation and PDU session control.

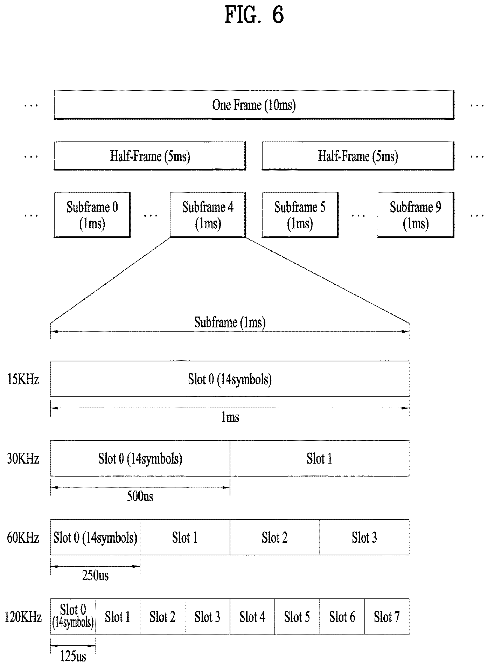

FIG. 6 illustrates a radio frame structure in NR, to which embodiment(s) of the present disclosure is applicable.

Referring to FIG. 6, a radio frame may be used for UL transmission and DL transmission in NR. A radio frame is 10ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot $N^{slot}_{symb}$, the number of slots per frame $N^{fame,u}_{slot}$, and the number of slots per subframe $N^{subframe,u}_{slot}$ according to an SCS configuration $\mu$ in the NCP case.

[Table 1]

| SCS (15*2u) | $N^{slot}_{symb}$ | $N^{frame,u}_{slot}$ | $N^{subframe,u}_{slot}$ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |

Table 2 below lists the number of symbols per slot, the number of slots per frame, and the number of slots per subframe according to an SCS in the ECP case.

[Table 2]

| SCS (15*2^u) | $N^{slot}_{symb}$ | $N^{frame,u}_{slot}$ | $N^{subframe,u}_{slot}$ |
|---|---|---|---|
| 60 kHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource including the same number of symbols (e.g., a subframe, slot, or TTI) (collectively referred to as a time unit (TU) for convenience) may be configured to be different for the aggregated cells.

In NR, various numerologies or SCSs may be supported to support various 5G services. For example, with an SCS of 15 kHz, a wide area in traditional cellular bands may be supported, while with an SCS of 30/60 kHz, a dense urban area, a lower latency, and a wide carrier bandwidth may be supported. With an SCS of 60 kHz or higher, a bandwidth larger than 24.25 GHz may be supported to overcome phase noise.

An NR frequency band may be defined by two types of frequency ranges, FR1 and FR2. The numerals in each frequency range may be changed. For example, the two types of frequency ranges may be given in [Table 3]. In the NR system, FR1 may be a "sub 6 GHz range" and FR2 may be an "above 6 GHz range" called millimeter wave (mmW).

[Table 3]

| Frequency Range designation | Corresponding frequency range | Subcarrier Spacing (SCS) |
|---|---|---|
| FR1 | 450 MHz - 6000 MHz | 15, 30, 60 kHz |
| FR2 | 24250 MHz - 52600 MHz | 60, 120, 240 kHz |

As mentioned above, the numerals in a frequency range may be changed in the NR system. For example, FR1 may range from 410 MHz to 7125 MHz as listed in [Table 4]. That is, FR1 may include a frequency band of 6 GHz (or 5850, 5900, and 5925 MHz) or above. For example, the frequency band of 6 GHz (or 5850, 5900, and 5925 MHz) or above may include an unlicensed band. The unlicensed band may be used for various purposes, for example, vehicle communication (e.g., autonomous driving).

[Table 4]

| Frequency Range designation | Corresponding frequency range | Subcarrier Spacing (SCS) |
|---|---|---|
| FR1 | 410 MHz - 7125 MHz | 15, 30, 60 kHz |
| FR2 | 24250 MHz - 52600 MHz | 60, 120, 240 kHz |

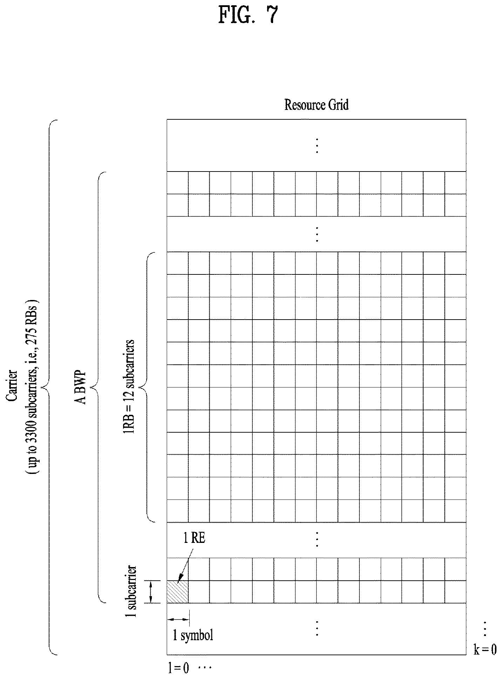

FIG. 7 illustrates a slot structure in an NR frame according to an embodiment of the present disclosure.

Referring to FIG. 7, a slot includes a plurality of symbols in the time domain. For example, one slot may include 14 symbols in an NCP case and 12 symbols in an ECP case. Alternatively, one slot may include 7 symbols in an NCP case and 6 symbols in an ECP case.

A carrier includes a plurality of subcarriers in the frequency domain. An RB may be defined by a plurality of (e.g., 12) consecutive subcarriers in the frequency domain. A bandwidth part (BWP) may be defined by a plurality of consecutive (physical) RBs ((P)RBs) in the frequency domain and correspond to one numerology (e.g., SCS, CP length, or the like). A carrier may include up to N (e.g., 5) BWPs. Data communication may be conducted in an activated BWP. Each element may be referred to as a resource element (RE) in a resource grid, to which one complex symbol may be mapped.

A radio interface between UEs or a radio interface between a UE and a network may include L1, L2, and L3. In various embodiments of the present disclosure, L1 may refer to the PHY layer. For example, L2 may refer to at least one of the MAC layer, the RLC layer, the PDCH layer, or the SDAP layer. For example, L3 may refer to the RRC layer.

Now, a description will be given of sidelink (SL) communication.

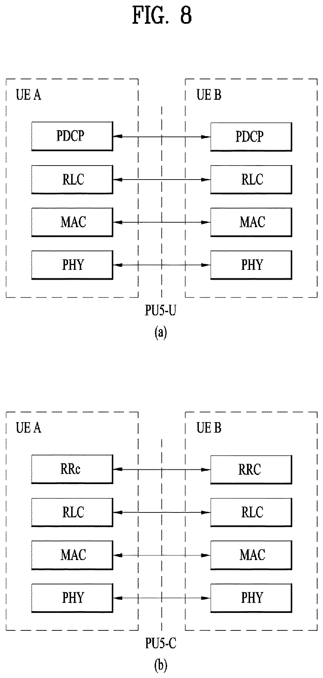

FIG. 8 illustrates a radio protocol architecture for SL communication according to an embodiment of the present disclosure. Specifically, FIG. 8(a) illustrates a user-plane protocol stack in LTE, and FIG. 8(b) illustrates a control-plane protocol stack in LTE.

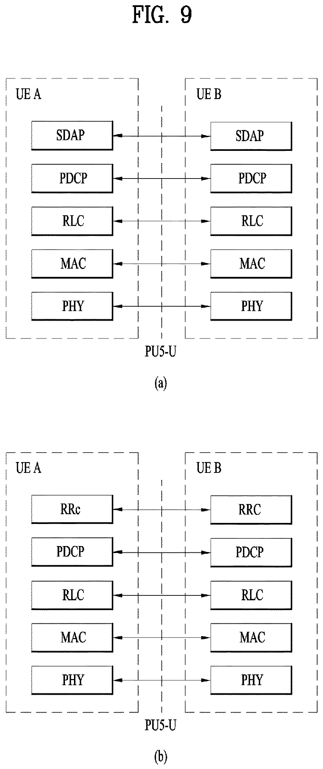

FIG. 9 illustrates a radio protocol architecture for SL communication according to an embodiment of the present disclosure. Specifically, FIG. 9(a) illustrates a user-plane protocol stack in NR, and FIG. 9(b) illustrates a control-plane protocol stack in NR.

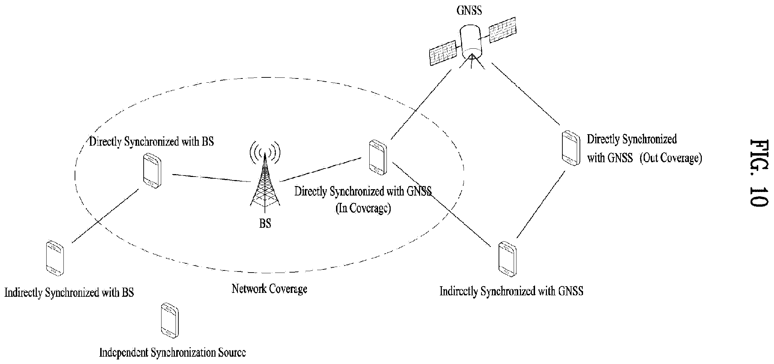

FIG. 10 illustrates a synchronization source or synchronization reference of V2X according to an embodiment of the present disclosure.

Referring to FIG. 10, in V2X, a UE may be directly synchronized with global navigation satellite systems (GNSS). Alternatively, the UE may be indirectly synchronized with the GNSS through another UE (within or out of network coverage). If the GNSS is configured as a synchronization source, the UE may calculate a direct frame number (DFN) and a subframe number based on a coordinated universal time (UTC) and a configured (or preconfigured) DFN offset.

Alternatively, a UE may be directly synchronized with a BS or may be synchronized with another UE that is synchronized in time/frequency with the BS. For example, the BS may be an eNB or a gNB. For example, when a UE is in network coverage, the UE may receive synchronization information provided by the BS and may be directly synchronized with the BS. Next, the UE may provide the synchronization information to another adjacent UE. If a timing of the BS is configured as a synchronization reference, the UE may follow a cell related to a corresponding frequency (when the UE is in cell coverage in frequency) or a primary cell or a serving cell (when the UE is out of cell coverage in frequency), for synchronization and DL measurement.

The BS (e.g., serving cell) may provide a synchronization configuration for a carrier used for V2X/SL communication. In this case, the UE may conform to the synchronization configuration received from the BS. If the UE fails to detect any cell in the carrier used for V2X/SL communication and fails to receive the synchronization configuration from the serving cell, the UE may conform to a preset synchronization configuration.

Alternatively, the UE may be synchronized with another UE that has failed to directly or indirectly acquire the synchronization information from the BS or the GNSS. A synchronization source and a preference may be preconfigured for the UE. Alternatively, the synchronization source and the preference may be configured through a control message provided by the BS.

SL synchronization sources may be related to synchronization priority levels. For example, a relationship between synchronization sources and synchronization priorities may be defined as shown in Table 5 or 6. Table 5 or 6 is merely an example, and the relationship between synchronization sources and synchronization priorities may be defined in various ways.

[Table 5]

| Priority level | GNSS-based synchronization | BS-based synchronization (eNB/gNB-based synchronization) |
|---|---|---|
| P0 | GNSS | BS |
| P1 | All UEs directly synchronized with GNSS | All UEs directly synchronized with BS |
| P2 | All UEs indirectly synchronized with GNSS | All UEs indirectly synchronized with BS |
| P3 | All other UEs | GNSS |
| P4 | N/A | All UEs directly synchronized with GNSS |
| P5 | N/A | All UEs indirectly synchronized with GNSS |
| P6 | N/A | All other UEs |

[Table 6]

| Priority level | GNSS-based synchronization | BS-based synchronization (eNB/gNB-based synchronization) |
|---|---|---|
| P0 | GNSS | BS |
| P1 | All UEs directly synchronized with GNSS | All UEs directly synchronized with BS |
| P2 | All UEs indirectly synchronized with GNSS | All UEs indirectly synchronized with GNSS |
| P3 | BS | GNSS |
| P4 | All UEs directly synchronized with GNSS | All UEs directly synchronized with GNSS |
| P5 | All UEs indirectly synchronized with GNSS | All UEs indirectly synchronized with GNSS |
| P6 | Remaining UE(s) with low priority | Remaining UE(s) with low priority |

In Table 5 or 6, P0 may mean the highest priority, and P6 may mean the lowest priority. In Table 5 or 6, the BS may include at least one of a gNB or an eNB.

Whether to use GNSS-based synchronization or eNB/gNB-based synchronization may be (pre)configured. In a single-carrier operation, the UE may derive a transmission timing thereof from an available synchronization reference having the highest priority.

Hereinafter, a sidelink synchronization signal (SLSS) and synchronization information will be described.

As an SL-specific sequence, the SLSS may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may use the S-PSS to detect an initial signal and obtain synchronization. In addition, the UE may use the S-PSS and the S-SSS to obtain detailed synchronization and detect a synchronization signal ID.

A physical sidelink broadcast channel (PSBCH) may be a (broadcast) channel for transmitting default (system) information that the UE needs to know first before transmitting and receiving SL signals. For example, the default information may include information related to an SLSS, a duplex mode (DM), a time division duplex (TDD) UL/DL configuration, information related to a resource pool, an application type related to the SLSS, a subframe offset, broadcast information, etc. For example, for evaluation of PSBCH performance in NR V2X, the payload size of the PSBCH may be 56 bits including a CRC of 24 bits.

The S-PSS, S-SSS, and PSBCH may be included in a block format (e.g., SL synchronization signal (SS)/PSBCH block) supporting periodical transmission (hereinafter, the SL SS/PSBCH block is referred to as a sidelink synchronization signal block (S-SSB)). The S-SSB may have the same numerology (i.e., SCS and CP length) as that of a physical sidelink control channel (PSCCH)/physical sidelink shared channel (PSSCH) on a carrier, and the transmission bandwidth may exist within a configured (or preconfigured) SL BWP. For example, the S-SSB may have a bandwidth of 11 RBs. For example, the PSBCH may span 11 RBs. In addition, the frequency position of the S-SSB may be configured (or preconfigured). Therefore, the UE does not need to perform hypothesis detection on frequency to discover the S-SSB on the carrier.

The NR SL system may support a plurality of numerologies with different SCSs and/or different CP lengths. In this case, as the SCS increases, the length of a time resource used by a transmitting UE to transmit the S-SSB may decrease. Accordingly, the coverage of the S-SSB may be reduced. Therefore, in order to guarantee the coverage of the S-SSB, the transmitting UE may transmit one or more S-SSBs to a receiving UE within one S-SSB transmission period based on the SCS. For example, the number of S-SSBs that the transmitting UE transmits to the receiving UE within one S-SSB transmission period may be pre-configured or configured for the transmitting UE. For example, the S-SSB transmission period may be 160 ms. For example, an S-SSB transmission period of 160 ms may be supported for all SCSs.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

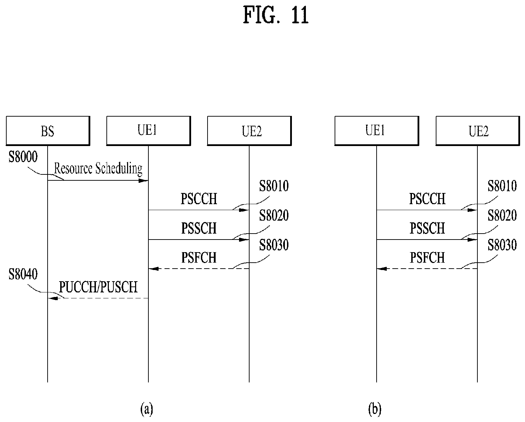

FIG. 11 illustrates a procedure of performing V2X or SL communication by a UE depending on a transmission mode according to an embodiment of the present disclosure. The embodiemnt of FIG. 11 may be combined with various embodiemnts of the present disclosure. In various embodiments of the present disclosure, a transmission mode may be referred to as a mode or a resource allocation mode. For the convenience of the following description, a transmission mode in LTE may be referred to as an LTE transmission mode, and a transmission mode in NR may be referred to as an NR resource allocation mode.

For example, FIG. 11(a) illustrates a UE operation related to LTE transmission mode 1 or LTE transmission mode 3. Alternatively, for example, FIG. 11(a) illustrates a UE operation related to NR resource allocation mode 1. For example, LTE transmission mode 1 may apply to general SL communication, and LTE transmission mode 3 may apply to V2X communication.

For example, FIG. 11(b) illustrates a UE operation related to LTE transmission mode 2 or LTE transmission mode 4. Alternatively, for example, FIG. 11(b) illustrates a UE operation related to NR resource allocation mode 2.

Referring to FIG. 11 (a), in LTE transmission mode 1, LTE transmission mode 3, or NR resource allocation mode 1, a BS may schedule an SL resource to be used for SL transmission by a UE. For example, in step S8000, the BS may transmit information related to an SL resource and/or information related to a UE resource to a first UE. For example, the UL resource may include a PUCCH resource and/or a PUSCH resource. For example, the UL resource may be a resource to report SL HARQ feedback to the BS.

For example, the first UE may receive information related to a Dynamic Grant (DG) resource and/or information related to a Configured Grant (CG) resource from the BS. For example, the CG resource may include a CG type 1 resource or a CG type 2 resource. In the present specification, the DG resource may be a resource configured/allocated by the BS to the first UE in Downlink Control Information (DCI). In the present specification, the CG resource may be a (periodic) resource configured/allocated by the BS to the first UE in DCI and/or an RRC message. For example, for the CG type 1 resource, the BS may transmit an RRC message including information related to the CG resource to the first UE. For example, for the CG type 2 resource, the BS may transmit an RRC message including information related to the CG resource to the first UE, and the BS may transmit DCI for activation or release of the CG resource to the first UE.

In step S8010, the first UE may transmit a PSCCH (e.g., Sidelink Control Information (SCI) or 1st-stage SCI) to a second UE based on the resource scheduling. In step S8020, the first UE may transmit a PSSCH (e.g., 2nd-stage SCI, MAC PDU, data, etc.) related to the PSCCH to the second UE. In step S8030, the first UE may receive a PSFCH related to the PSCCH/PSSCH from the second UE. For example, HARQ feedback information (e.g., NACK information or ACK information) may be received from the second UE over the PSFCH. In step S8040, the first UE may transmit/report HARQ feedback information to the BS over a PUCCH or PUSCH. For example, the HARQ feedback information reported to the BS may include information generated by the first UE based on HARQ feedback information received from the second UE. For example, the HARQ feedback information reported to the BS may include information generated by the first UE based on a preset rule. For example, the DCI may be a DCI for scheduling of SL. For example, the format of the DCI may include DCI format 3_0 or DCI format 3_1. Table 7 shows one example of DCI for scheduling of SL.

[Table 7]

---

7.3.1.4.1 Format 3_0

DCI format 3_0 is used for scheduling of NR PSCCH and NR PSSCH in one cell.

The following information is transmitted by means of the DCI format 3_0 with CRC scrambled by SL-RNTI or SL-CS-RNTI:

- Resource pool index $-\lceil \log_2 I \rceil$ bits, where $I$ is the number of resource pools for transmission configured by the higher layer parameter *sl-TxPoolScheduling.*

- Time gap - 3 bits determined by higher layer parameter *sl-DCI-ToSL-Trans,* as defined in clause 8.1.2.1 of [6, TS 38.214]

- HARQ process number - 4 bits.

- New data indicator - 1 bit.

- Lowest index of the subchannel allocation to the initial transmission - $\lceil \log_2(N_{\text{subChannel}}^{\text{SL}}) \rceil$ bits as defined in clause 8.1.2.2 of [6, TS 38.214]

- SCI format 1-A fields according to clause 8.3.1.1:

- Frequency resource assignment.

- Time resource assignment.

- PSFCH-to-HARQ feedback timing indicator $-\lceil \log_2 N_{\text{fb\_timing}} \rceil$ bits, where $N_{\text{fb\_timing}}$ is the number of entries in the higher layer parameter *sl-PSFCH-ToPUCCH,* as defined in clause 16.5 of [5, TS 38.213]

- PUCCH resource indicator - 3 bits as defined in clause 16.5 of [5, TS 38.213].

- Configuration index - 0 bit if the UE is not configured to monitor DCI format 3_0 with CRC scrambled by SL-CS-RNTI; otherwise 3 bits as defined in clause 8.1.2 of [6, TS 38.214]. If the UE is configured to monitor DCI format 3_0 with CRC scrambled by SL-CS-RNTI, this field is reserved for DCI format 3_0 with CRC scrambled by SL-RNTI.

- Counter sidelink assignment index - 2 bits

- 2 bits as defined in clause 16.5.2 of [5, TS 38.213] if the UE is configured with *pdsch-HARQ-ACK-Codebook = dynamic*

- 2 bits as defined in clause 16.5.1 of [5, TS 38.213] if the UE is configured with *pdsch-HARQ-ACK-Codebook = semi-static*

- Padding bits, if required

If multiple transmit resource pools are provided in *sl-TxPoolScheduling,* zeros shall be appended to the DCI format 3_0 until the payload size is equal to the size of a DCI format

3_0 given by a configuration of the transmit resource pool resulting in the largest number of information bits for DCI format 3_0.

If the UE is configured to monitor DCI format 3_1 and the number of information bits in DCI format 3_0 is less than the payload of DCI format 3_1, zeros shall be appended to DCI format 3_0 until the payload size equals that of DCI format 3_1.

7.3.1.4.2 Format 3_1

DCI format 3_1 is used for scheduling of LTE PSCCH and LTE PSSCH in one cell.

The following information is transmitted by means of the DCI format 3_1 with CRC scrambled by SL Semi-Persistent Scheduling V-RNTI:

---

(continued)

- Timing offset - 3 bits determined by higher layer parameter *sl-TimeOffsetEUTRA-List,* as defined in clause 16.6 of [5, TS 38.213]

- Carrier indicator -3 bits as defined in 5.3.3.1.9A of [11, TS 36.212].

- Lowest index of the subchannel allocation to the initial transmission - $\left\lceil \log_2(N_{\text{subchannel}}^{\text{SL}}) \right\rceil$ bits as defined in 5.3.3.1.9A of [11, TS 36.212].

- Frequency resource location of initial transmission and retransmission, as defined in 5.3.3.1.9A of [11, TS 36.212]

- Time gap between initial transmission and retransmission, as defined in 5.3.3.1.9A of [11, TS 36.212]

- SL index - 2 bits as defined in 5.3.3.1.9A of [11, TS 36.212]

- SL SPS configuration index - 3 bits as defined in clause 5.3.3.1.9A of [11, TS 36.212].

- Activation/release indication - 1 bit as defined in clause 5.3.3.1.9A of [11, TS 36.212].

Referring to FIG. 11 (b), in an LTE transmission mode 2, an LTE transmission mode 4, or an NR resource allocation mode 2, a UE may determine an SL transmission resource within an SL resource configured by a BS/network or a preconfigured SL resource. For example, the configured SL resource or the preconfigured SL resource may be a resource pool. For example, the UE may autonomously select or schedule resources for SL transmission. For example, the UE may perform SL communication by selecting a resource by itself within a configured resource pool. For example, the UE may perform sensing and resource (re)selection procedures to select a resource by itself within a selection window. For example, the sensing may be performed in unit of a sub-channel. For example, in the step S8010, the first UE having self-selected a resource in the resource pool may transmit PSCCH (e.g., Side Link Control Information (SCI) or 1st-stage SCI) to the second UE using the resource. In the step S8020, the first UE may transmit PSSCH (e.g., 2nd-stage SCI, MAC PDU, data, etc.) related to the PSCCH to the second UE. In the step S8030, the first UE may receive PSFCH related to the PSCCH/PSSCH from the second UE.

Referring to FIG. 11 (a) or FIG. 11 (b), for example, the first UE may transmit the SCI to the second UE on the PSCCH. Alternatively, for example, the first UE may transmit two consecutive SCIs (e.g., two-stage SCI) to the second UE on the PSCCH and/or PSSCH. In this case, the second UE may decode the two consecutive SCIs (e.g., two-stage SCI) to receive the PSSCH from the first UE. In the present specification, the SCI transmitted on the PSCCH may be referred to as a 1st SCI, a 1st-stage SCI, or a 1st-stage SCI format, and the SCI transmitted on the PSSCH may be referred to as a 2nd SCI, a 2nd SCI, a 2nd-stage SCI format. For example, the 1st-stage SCI format may include SCI format 1-A, and the 2nd-stage SCI format may include SCI format 2-A and/or SCI format 2-B. Table 8 shows one example of a 1st-stage SCI format.

[Table 8]

8.3.1.1    SCI format 1-A

SCI format 1-A is used for the scheduling of PSSCH and 2nd-stage-SCI on PSSCH The following information is transmitted by means of the SCI format 1-A:

- Priority - 3 bits as specified in clause 5.4.3.3 of [12, TS 23.287] and clause 5.22.1.3.1 of [8, TS 38.321]. Value '000' of Priority field corresponds to priority value '1', value '001' of Priority field corresponds to priority value '2', and so on.

- Frequency resource assignment - $\left\lceil \log_2(\frac{N_{\text{subChannel}}^{\text{SL}}(N_{\text{subChannel}}^{\text{SL}} + 1)}{2}) \right\rceil$ bits when the value of the higher layer parameter *sl-MaxNumPerReserve* is configured to 2;

otherwise $\left\lceil \log_2(\frac{N_{\text{subChannel}}^{\text{SL}}(N_{\text{subChannel}}^{\text{SL}} + 1)(2N_{\text{subChannel}}^{\text{SL}} + 1)}{6}) \right\rceil$ bits when the value of the higher layer parameter *sl-MaxNumPerReserve* is configured to 3, as defined in clause 8.1.5 of [6, TS 38.214].

- Time resource assignment - 5 bits when the value of the higher layer parameter *sl-MaxNumPerReserve* is configured to 2; otherwise 9 bits when the value of the higher layer parameter *sl-MaxNumPerReserve* is configured to 3, as defined in clause 8.1.5 of [6, TS 38.214].

- Resource reservation period - $\left\lceil \log_2 N_{\text{rsv\_period}} \right\rceil$ bits as defined in clause 16.4 of [5, TS 38.213], where $N_{\text{rsv\_period}}$ is the number of entries in the higher layer parameter *sl-ResourceReservePeriodList,* if higher layer parameter *sl-MultiReserveResource* is configured; 0 bit otherwise.

(continued)

- DMRS pattern - $\lceil \log_2 N_{\text{pattern}} \rceil$ bits as defined in clause 8.4.1.1.2 of [4, TS 38.211], where $N_{\text{pattern}}$ is the number of DMRS patterns configured by higher layer parameter *sl-PSSCH-DMRS-TimePattern-List*.

- 2nd-stage SCI format - 2 bits as defined in Table 8.3.1.1-1.

- Beta_offset indicator - 2 bits as provided by higher layer parameter *sl-BetaOffsets2ndSCI* and Table 8.3.1.1-2.

- Number of DMRS port - 1 bit as defined in Table 8.3.1.1-3.

- Modulation and coding scheme - 5 bits as defined in clause 8.1.3 of [6, TS 38.214].

- Additional MCS table indicator - as defined in clause 8.1.3.1 of [6, TS 38.214]: 1 bit if one MCS table is configured by higher layer parameter *sl-Additional-MCS-Table*; 2 bits if two MCS tables are configured by higher layer parameter *sl-Additional-MCS-Table*; 0 bit otherwise.

- PSFCH overhead indication - 1 bit as defined clause 8.1.3.2 of [6, TS 38.214] if higher layer parameter *sl-PSFCH-Period* = 2 or 4; 0 bit otherwise.

- Reserved - a number of bits as determined by higher layer parameter *sl-NumReservedBits,* with value set to zero.

Table 9 shows exemplary 2nd-stage SCI formats.

[Table 9]

8.4 Sidelink control information on PSSCH SCI carried on PSSCH is a 2nd-stage SCI, which transports sidelink scheduling information.

8.4.1 2nd-stage SCI formats

The fields defined in each of the 2nd-stage SCI formats below are mapped to the information bits $a_0$ to $a_{A-1}$ as follows:

Each field is mapped in the order in which it appears in the description, with the first field mapped to the lowest order information bit $a_0$ and each successive field mapped to higher order information bits. The most significant bit of each field is mapped to the lowest order information bit for that field, e.g. the most significant bit of the first field is mapped to $a_0$.

8.4.1.1 SCI format 2-A

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits.

- New data indicator - 1 bit.

- Redundancy version - 2 bits as defined in Table 7.3.1.1.1-2.

- Source ID - 8 bits as defined in clause 8.1 of [6, TS 38.214].

- Destination ID - 16 bits as defined in clause 8.1 of [6, TS 38.214].

- HARQ feedback enabled/disabled indicator - 1 bit as defined in clause 16.3 of [5, TS 38.213].

- Cast type indicator - 2 bits as defined in Table 8.4.1.1-1 and in clause 8.1 of [6, TS 38.214].

- CSI request - 1 bit as defined in clause 8.2.1 of [6, TS 38.214] and in clause 8.1 of [6, TS 38.214].

Referring to FIG. 11(a) or FIG. 11(b), in step S8030, a first UE may receive a PSFCH based on Table 10. For example, the first UE and a second UE may determine a PSFCH resource based on Table 10, and the second UE may transmit HARQ feedback to the first UE on the PSFCH resource.

[Table 10]

16.3 UE procedure for reporting HARQ-ACK on sidelink

A UE can be indicated by an SCI format scheduling a PSSCH reception to transmit a PSFCH with HARQ-ACK information in response to the PSSCH reception. The UE provides HARQ-ACK information that includes ACK or NACK, or only NACK.

A UE can be provided, by *sl-PSFCH-Period,* a number of slots in a resource pool for a period of PSFCH transmission occasion resources. If the number is zero, PSFCH transmissions from the UE in the resource pool are disabled.

A UE expects that a slot $t'^{SL}_k$ ($0 \leq k < T'_{max}$) has a PSFCH transmission occasion resource if $k$ mod $N^{PSFCH}_{PSSCH} = 0$, where $t'^{SL}_k$ is defined in [6, TS 38.214], and $T'_{max}$ is a number of slots that belong to the resource pool within 10240 msec according to [6, TS 38.214], and $N^{PSFCH}_{PSSCH}$ is provided by *sl-PSFCH-Period.*

A UE may be indicated by higher layers to not transmit a PSFCH in response to a PSSCH reception [11, TS 38.321].

If a UE receives a PSSCH in a resource pool and the HARQ feedback enabled/disabled indicator field in an associated SCI format 2-A or a SCI format 2-B has value 1 [5, TS 38.212], the UE provides the HARQ-ACK information in a PSFCH transmission in the resource pool. The UE transmits the PSFCH in a first slot that includes PSFCH resources and is at least a

number of slots, provided by *sl-MinTimeGapPSFCH,* of the resource pool after a last slot of the PSSCH reception.

A UE is provided by *sl-PSFCH-RB-Set* a set of $M^{PSFCH}_{PRB, set}$ PRBs in a resource pool for PSFCH transmission in a PRB of the resource pool. For a number of $N_{subch}$ sub-channels for the resource pool, provided by *sl-NumSubchannel,* and a number of PSSCH slots related to a PSFCH slot that is less than or equal to $N^{PSFCH}_{PSSCH}$, the UE allocates the $\left[\left(i + j \cdot N^{PSFCH}_{PSSCH}\right) \cdot M^{PSFCH}_{subch, slot}, \left(i + 1 + j \cdot N^{PSFCH}_{PSSCH}\right) \cdot M^{PSFCH}_{subch, slot} - 1\right]$ PRBs from the

$M^{PSFCH}_{PRB, set}$ PRBs to slot i among the PSSCH slots related to the PSFCH slot and sub-channel j, where $M^{PSFCH}_{subch, slot} = M^{PSFCH}_{PRB, set}/\left(N_{subch} \cdot N^{PSFCH}_{PSSCH}\right), \ 0 \leq i < N^{PSFCH}_{PSSCH}$, $0 \leq j < N_{subch}$, and the allocation starts in an ascending order of i and continues in an ascending order of j. The UE expects that $M^{PSFCH}_{PRB, set}$ is a multiple of $N_{subch} \cdot N^{PSFCH}_{PSSCH}$.

The second OFDM symbol *l'* of PSFCH transmission in a slot is defined as *l' = sl-StartSymbol + sl-LengthSymbols - 2 .*

A UE determines a number of PSFCH resources available for multiplexing HARQ-ACK information in a PSFCH transmission as $R^{PSFCH}_{PRB, CS} = N^{PSFCH}_{type} \cdot M^{PSFCH}_{subch, slot} \cdot N^{PSFCH}_{CS}$ where $N^{PSFCH}_{CS}$ is a number of cyclic shift pairs for the resource pool provided by *sl-NumMuxCS-Pair* and, based on an indication by *sl-PSFCH-CandidateResourceType,*

- if *sl-PSFCH-CandidateResourceType* is configured as *startSubCH,* $N^{PSFCH}_{type} = 1$ and the $M^{PSFCH}_{subch, slot}$ PRBs are related to the starting sub-channel of the corresponding PSSCH;

- if *sl-PSFCH-CandidateResourceType* is configured as *allocSubCH,* $N^{PSFCH}_{type} = N^{PSSCH}_{subch}$ and the $N^{PSSCH}_{subch} \cdot M^{PSFCH}_{subch, slot}$ PRBs are related to the $N^{PSSCH}_{subch}$ sub-channels of the corresponding PSSCH.

The PSFCH resources are first indexed according to an ascending order of the PRB index, from the $N^{PSFCH}_{type} \cdot M^{PSFCH}_{subch, slot}$ PRBs, and then according to an ascending order of the cyclic shift pair index from the $N^{PSFCH}_{CS}$ cyclic shift pairs.

A UE determines an index of a PSFCH resource for a PSFCH transmission in response to a PSSCH reception as $(P_{ID} + M_{ID}) mod R^{PSFCH}_{PRB, CS}$ where $P_{ID}$ is a physical layer source ID provided by SCI format 2-A or 2-B [5, TS 38.212] scheduling the PSSCH reception, and $M_{ID}$ is the identity of the UE receiving the PSSCH as indicated by higher layers if the UE detects a SCI format 2-A with Cast type indicator field value of "01"; otherwise, $M_{ID}$ is zero.

(continued)

| |
|---|
| A UE determines a $m_0$ value, for computing a value of cyclic shift $\alpha$ [4, TS 38.211], from a cyclic shift pair index corresponding to a PSFCH resource index and from $N_{CS}^{PSFCH}$ using Table 16.3-1. |

Referring to FIG. 11(a), in step S8040, the first UE may transmit SL HARQ feedback to the BS over a PUCCH and/or PUSCH based on Table 11.

[Table 11]

| |
|---|
| 16.5 UE procedure for reporting HARQ-ACK on uplink |
| A UE can be provided PUCCH resources or PUSCH resources [12, TS 38.331] to report HARQ-ACK information that the UE generates based on HARQ-ACK information that the UE obtains from PSFCH receptions, or from absence of PSFCH receptions. The UE reports HARQ-ACK information on the primary cell of the PUCCH group, as described in clause 9, of the cell where the UE monitors PDCCH for detection of DCI format 3_0. |
| For SL configured grant Type 1 or Type 2 PSSCH transmissions by a UE within a time period provided by *sl-PeriodCG,* the UE generates one HARQ-ACK information bit in response to the PSFCH receptions to multiplex in a PUCCH transmission occasion that is after a last time resource, in a set of time resources. |
| For PSSCH transmissions scheduled by a DCI format 3_0, a UE generates HARQ-ACK information in response to PSFCH receptions to multiplex in a PUCCH transmission occasion that is after a last time resource in a set of time resources provided by the DCI format 3_0. |
| From a number of PSFCH reception occasions, the UE generates HARQ-ACK information to report in a PUCCH or PUSCH transmission. The UE can be indicated by a SCI format to perform one of the following and the UE constructs a HARQ-ACK codeword with HARQ-ACK information, when applicable |
| - for one or more PSFCH reception occasions related to SCI format 2-A with Cast type indicator field value of "10" |
| - generate HARQ-ACK information with same value as a value of HARQ-ACK information the UE determines from the last PSFCH reception from the number of PSFCH reception occasions corresponding to PSSCH transmissions or, if the UE determines that a PSFCH is not received at the last PSFCH reception occasion and ACK is not received in any of previous PSFCH reception occasions, generate NACK |
| - for one or more PSFCH reception occasions related to SCI format 2-A with Cast type indicator field value of "01" |
| - generate ACK if the UE determines ACK from at least one PSFCH reception occasion, from the number of PSFCH reception occasions corresponding to PSSCH transmissions, in PSFCH resources corresponding to every identity $M_{ID}$ of the UEs that the UE expects to receive the PSSCH, as described in clause 16.3; otherwise, generate NACK |
| - for one or more PSFCH reception occasions related to SCI format 2-B or SCI format 2-A with Cast type indicator field value of "11" |
| - generate ACK when the UE determines absence of PSFCH reception for the last PSFCH reception occasion from the number of PSFCH reception occasions corresponding to PSSCH transmissions; otherwise, generate NACK |
| After a UE transmits PSSCHs and receives PSFCHs in corresponding PSFCH resource occasions, the priority value of HARQ-ACK information is same as the priority value of the PSSCH transmissions that is related to the PSFCH reception occasions providing the HARQ-ACK information. |
| The UE generates a NACK when, due to prioritization, as described in clause 16.2.4, the UE does not receive PSFCH in any PSFCH reception occasion related to a PSSCH transmission in a resource provided by a DCI format 3_0 or, for a configured grant, in a resource provided in a single period and for which the UE is provided a PUCCH resource to report HARQ-ACK information. The priority value of the NACK is same as the priority value of the PSSCH transmission. |
| The UE generates a NACK when, due to prioritization as described in clause 16.2.4, the UE does not transmit a PSSCH in any of the resources provided by a DCI format 3_0 or, for a configured grant, in any of the resources provided in a single period and for which the UE is provided a PUCCH resource to report HARQ-ACK information. The priority value of the NACK is same as the priority value of the PSSCH that was not transmitted due to prioritization. |
| The UE generates an ACK if the UE does not transmit a PSCCH with a SCI format 1-A scheduling a PSSCH in any of the resources provided by a configured grant in a single period and for which the UE is provided a PUCCH resource to report HARQ-ACK information. The priority value of the ACK is same as the largest priority value among the possible priority values for the configured grant. |

Table 12 below shows details of selection and reselection of an SL relay UE defined in 3GPP TS 36.331. The contents of Table 12 are used as the prior art of the present disclosure, and related necessary details may be found in 3GPP TS 36.331.

[Table 12]

| 5.10.11.4 Selection and reselection of sidelink relay UE |
| --- |
| A UE capable of sidelink remote UE operation that is configured by upper layers to search for a sidelink relay UE shall: |
| 1> if out of coverage on the frequency used for sidelink communication, as defined in TS 36.304 [4], clause 11.4; or |
| 1> if the serving frequency is used for sidelink communication and the RSRP measurement of the cell on which the UE camps (RRC_IDLE)/ the PCell (RRC_CONNECTED) is below *threshHigh* within *remote UE-Config :* |
| 2>search for candidate sidelink relay UEs, in accordance with TS 36.133 [16] |
| 2>when evaluating the one or more detected sidelink relay UEs, apply layer 3 filtering as specified in 5.5.3.2 across measurements that concern the same ProSe Relay UE ID and using the *filterCoefficient* in *SystemInformationBlockType19* (in coverage) or the |
| preconfigured *filterCoefficient* as defined in 9.3(out of coverage), before using the SD-RSRP measurement results; |
| NOTE 1:   The details of the interaction with upper layers are up to UE implementation. |
| 2>if the UE does not have a selected sidelink relay UE: |
| 3> select a candidate sidelink relay UE which SD-RSRP exceeds *q-RxLevMin* included in either *reselectionInfoIC* (in coverage) or *reselectionInfoOoC* (out of coverage) by *minHyst;* |
| 2>else if SD-RSRP of the currently selected sidelink relay UE is below *q-RxLevMin* included in either *reselectionInfoIC* (in coverage) or *reselectionInfoOoC* (out of coverage); or if upper layers indicate not to use the currently selected sidelink relay: (i.e. sidelink relay UE reselection): |
| 3> select a candidate sidelink relay UE which SD-RSRP exceeds *q-RxLevMin* included in either *reselectionInfoIC* (in coverage) or *reselectionInfoOoC* (out of coverage) by *minHyst;* |
| 2>else if the UE did not detect any candidate sidelink relay UE which SD-RSRP exceeds *q-RxLevMin* included in either *reselectionInfoIC* (in coverage) or *reselectionInfoOoC* (out of coverage) by *minHyst:* |
| 3> consider no sidelink relay UE to be selected; |
| NOTE 2:   The UE may perform sidelink relay UE reselection in a manner resulting in selection of the sidelink relay UE, amongst all candidate sidelink relay UEs meeting higher layer criteria, that has the best radio link quality. Further details, including interaction with upper layers, are up to UE implementation. |
| 5.10.11.5 Sidelink remote UE threshold conditions |
| A UE capable of sidelink remote UE operation shall: |
| 1>if the threshold conditions specified in this clause were not met: |
| 2>if *threshhigh* is not included in *remoteUE-Config* within *SystemInformationBlockType19;* or |
| 2>if *threshHigh* is included in *remoteUE-Config* within *SystemInformationBlockType19*; and the RSRP measurement of the PCell, or the cell on which the UE camps, is below *threshHigh* by *hystMax* (also included within *remoteUE-Config*): |
| 3> consider the threshold conditions to be met (entry); |
| 1> else: |
| 2>if *threshHigh* is included in *remoteUE-Config* within *SystemInformationBlockType19*; and the RSRP measurement of the PCell, or the cell on which the UE camps, is above *threshHigh* (also included within *remoteUE-Config*): |
| 3> consider the threshold conditions not to be met (leave); |

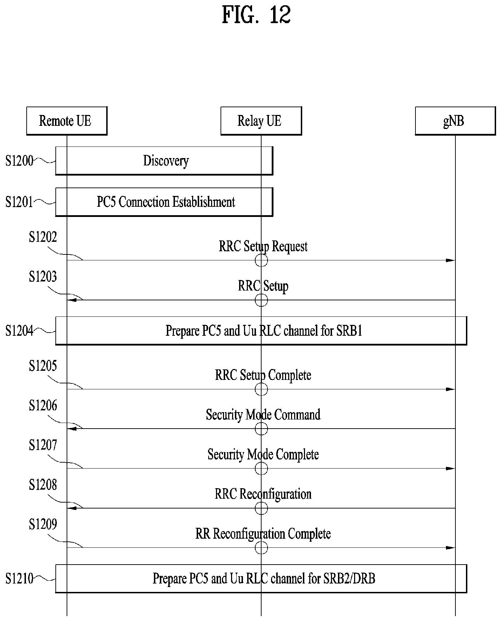

FIG. 12 shows connection management captured in the TR document (3GPP TR 38.836) related to Rel-17 NR SL and a procedure for path switching from direct to indirect. A remote UE needs to establish its own PDU session/DRB with a network before user plane data transmission.

APC5 unicast link establishment procedure in terms of PC5-RRC of Rel-16 NR V2X may be reused to establish a secure unicast link for L2 UE-to-network relaying between the remote UE and a relay UE before the remote UE establishes a Uu RRC connection with the network through the relay UE.

For both in-coverage and out-of-coverage, when the remote UE initiates a first RRC message for connection establishment with a gNB, a PC5 L2 configuration for transmission between the remote UE and the UE-to-network relay UE may be based on an RLC/MAC configuration defined in the standard. Establishment of Uu SRB1/SRB2 and DRB of the remote UE complies with a legacy Uu configuration procedure for L2 UE-to-network relay.

A high-level connection establishment procedure shown in FIG. 12 is applied to the L2 UE-to-network relay.

In operation S1200, the remote and relay UEs may perform a discovery procedure and establish a PC5-RRC connection in operation S1201 based on the existing Rel-16 procedure.

In operation S1202, the remote UE may transmit a first RRC message (i.e., RRCSetupRequest) for connection establishment with the gNB through the relay UE by using a default L2 configuration of PC5. The gNB responds to the remote UE with an RRCSetup message (S1203). Transmission of RRCSetup to the remote UE uses a default configuration of PC5. When the relay UE does not start in RRC_CONNECTED, the relay UE needs to perform its own connection setup upon receiving a message about the default L2 configuration of PC5. In this operation, details for the relay UE to transmit the RRCSetupRequest/RRCSetup message to the remote UE may be discussed in stage WI.

In operation S1204, the gNB and the relay UE perform a relay channel setup procedure via Uu. According to the configuration of the gNB, the relay/remote UE establishes an RLC channel for relaying SRB1 with the remote UE via PC5. In this operation, a relay channel for SRB 1 is prepared.

In operation S1205, the remote UE SRB1 message (e.g., RRCSetupComplete message) is transmitted to the gNB via the relay UE by using the SRB 1 relay channel via PC5. The remote UE performs RRC connection via Uu.

In operation S1206, the remote UE and the gNB configure security according to a legacy procedure, and a security message is transmitted through the relay UE.

In operation S1210, the gNB configures an additional RLC channel between the gNB and the relay UE for traffic relay. According to the configuration of the gNB, the relay/remote UE configures an RLC channel between the remote UE and the relay UE for traffic relay. The gNB transmits RRCReconfiguration to the remote UE through the relay UE to configure relay SRB2/DRB. The remote UE transmits RRCReconfigurationComplete in response to the gNB through the relay UE.

For L2 UE-to-network relay in addition to connection establishment procedure:

- The RRC reconfiguration and RRC disconnection procedures may reuse legacy RRC procedures with the message content/configuration design left to stage WI.
- RRC connection reconfiguration and RRC connection resumption procedures may reuse the existing RRC procedure as a baseline by considering the connection establishment procedure of the above L2 UE-to-network relay to handle a relay-specific part along with message content/configuration design. The message content/configuration may be defined later.

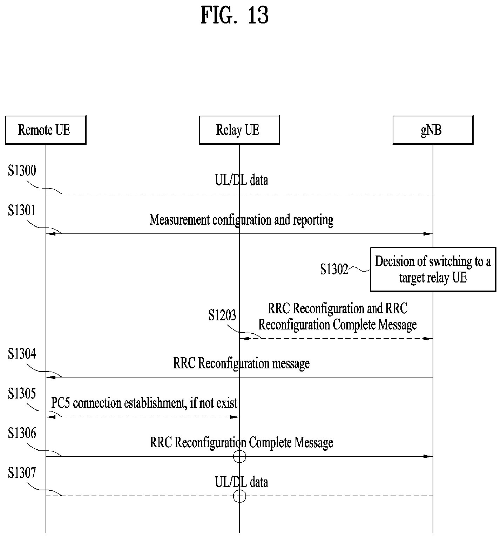

FIG. 13 illustrates direct to indirect path switching. For service continuity of L2 UE-to-network relay, the procedure in FIG. 13 may be used when a remote UE switches to an indirect relay UE.

Referring to FIG. 13, in operation S1301, the remote UE measures/discovers a candidate relay UE and then reports one or several candidate relay UEs. The remote UE may filter out an appropriate relay UE that meets higher layer standard during reporting. The report may include the ID and SL RSRP information of the relay UE, and in this case, the PC5 measurement details may be determined later.

In operation S1302, the gNB determines to switch to a target relay UE and the target (re)configuration is optionally transmitted to the relay UE.

In operation S1304, the RRC reconfiguration message for the remote UE may include the ID of the target relay UE, target Uu, and PC5 configuration.

In operation S1305, the remote UE establishes a PC5 connection with the target relay UE when the connection is not established.

In operation S1306, the remote UE feeds back RRCReconfigurationComplete to the gNB via a target path by using the target configuration provided in RRCReconfiguration.

In operation S1307, a data path is switched.

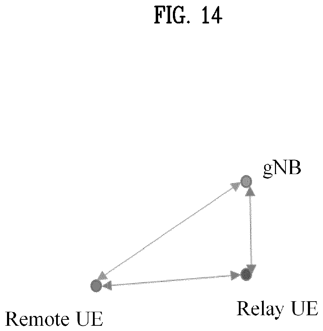

FIG. 14 shows that a remote UE forms a path with a base station gNB in a sidelink. When the remote UE is active on both a direct path and an indirect path, a method for handling radio link failure (RLF) that may occur on the direct link and/or the indirect link may be discussed, and embodiments related thereto are described below. Here, the direct link means a Uu link between the remote UE and the gNB, and the indirect link means a link to the gNB through a relay UE.

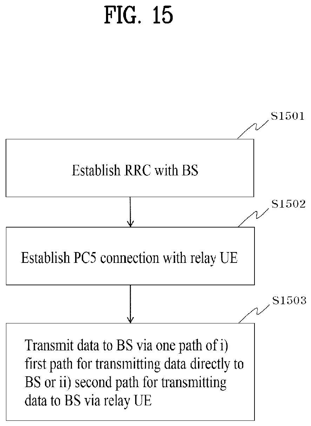

According to an embodiment, the remote UE may establish a radio resource control (RRC) connection with the gNB (S1501 of FIG. 15), and the remote UE may establish a PC5 RRC connection with the relay UE (S1502). The remote UE may transmit data to the gNB via one path of i) a first path for transmitting data directly to the gNB or ii) a second path for transmitting data to the gNB via the relay UE (S1503).

The remote UE may, based on detecting radio link failure (RLF) in either of the first path and the second path, report the RLF to the gNB through a message based on a Sidelink Signaling Radio Bearer through a path in which the RLF is not detected. Here, the SRB may be SRB 1 and the message may be SidelinUEInformation (SUI). Alternatively, the SRB may be SRB 3 and the message may be RRCReconfigurationRequest. In this case, a cause value of the RRCReconfigurationRequest message is Uu link RLF.

Both the first path and the second path are activated, and the remote UE may transmit different data on the first path and the second path before detecting the RLF. The remote UE may transmit all subsequent data of the different data through the path in which the RLF is not detected.

Alternatively, when the remote UE transmits different data PDUs on the direct link and the indirect link, the remote UE may receive a temporal/default/specified configuration from the beginning to transmit data over the other link when RLF occurs on either link. This temporal/default/specified configuration may be mapping information between bearer information of the indirect link and bearer information of the direct link. That is, information for mapping the Uu bearer of the direct link to the SL bearer of the indirect link may be pre-configured in the remote UE, and when RLF occurs in one of the links, a message may be transmitted to another link in which RLF does not occur based on the configured mapping information. Alternatively, the remote UE may report to the gNB via the SUI/AUI whether to transmit the same data PDU (for reliability) or different data PDUs (for improved throughput) over the direct link and the indirect link. Alternatively, the gNB may determine whether to transmit data PDUs through the direct link and indirect link or transmit different data PDUs based on information such as QoS profile of data reported through the SUI/AUI.

In any case, when the remote UE (may be only when transmitting different data PDUs over direct/indirect link) performs RRCReconfiguration over one link (direct and/or indirect) (including configuring the settings of the other link), the gNB may pre-allocate a temporal/default/specified RRCRconfiguration (e.g., SDAP, PDCP, or RLC LCHID bearer) to be used until a new RRCReconfiguration is received in case an RLF occurs on the other (either) link. This is to ensure that when RLF occurs on one link, data PDUs may continue to be transmitted through the other link until a new RRCReconfiguration is received.

The remote UE may report the RLF of the Uu link to the gNB through the second path based on detecting the RLF of the Uu link related to the first path. That is, when RLF occurs in the Uu link, the remote UE may notify the gNB of the Uu link RLF through the indirect link via the relay UE. In this case, when the remote UE transmits different data protocol data units (PDUs) over the direct link and the indirect link to increase throughput, the data PDUs transmitted over the direct link need to be transmitted over the indirect link, and thus the RRCReconfigurationRequest message may be transmitted over the indirect link. In this case, the remote UE may also transmit the RRCReconfigurationRequest message with Uu link RLF as a cause value. Alternatively, the Uu link RLF may be notified to the relay UE in a separate PC5-RRC message. The relay UE that receives the message may also separately notify the gNB. Alternatively, the Uu link RLF may be notified to the gNB via the SUI/AUI or the like.

Alternatively, when RLF occurs in the Uu link, the remote UE may notify the gNB of the Uu link RLF through the indirect link via the relay UE. In this case, when the remote UE transmits different data PDUs over the direct link and the indirect link to increase throughput, the data PDU transmitted over the direct link needs to be transmitted over the indirect link, and thus a new RRCReconfiguration message needs to be received over the indirect link. To this end, the Uu link RLF may be notified to the relay UE in a separate PC5-RRC message. The relay UE that receives the message may also separately notify the gNB. Alternatively, the remote UE may notify the gNB via the relay UE via the SUI/AUI or the like. When the remote UE transmits different data PDUs over the direct link and the indirect link to increase throughput, the data PDU transmitted over the direct link needs to be transmitted over the indirect link, and thus a status report (including a SN report) may be performed over the indirect link.

Alternatively, when the remote UE performs cell reselection due to occurrence of Uu direct link RLF and a cell other than the cell of the direct link that establishes connection is detected as the best cell, the remote UE may notify the gNB of this via the indirect link. Alternatively, when another cell is detected, or when an RRCReestablishment/RRCSetup message is received from another cell (or an RRCReestablishmentRequest/RRCReestablishmentComplete, RRCSetupRequest/RRCSetupComplete message is transmitted), this may notify the gNB through the indirect link. The gNB that receives this message may recognize that the remote UE is no longer capable of multi-path relay and may remove the context for the corresponding remote UE. Alternatively, when the remote UE is a remote UE that necessarily requires a multi-path relay operation, the corresponding remote UE may transmit a release message to the gNB and the relay UE and trigger a relay reselection operation to find a new relay UE belonging to a cell accessible via the direct link.

When the remote UE performs cell selection over a Uu direct link, this may notify the gNB of this over the indirect link. In this case, the gNB may determine that the remote UE is a UE that no longer performs a multi-path and may configure an RRC reconfiguration to the relay/remote UE to release/modify the related (bearer) configuration.

The remote UE may report the RLF of the sidelink to the gNB through the first path based on detecting the RLF of the sidelink related to the second path. That is, when the remote UE detects SL RLF between the remote UE and the relay UE during the indirect link, the remote UE may transmit an RRCReconfigurationRequest message to the direct link with the SL RLF as the cause value. As explained above, data PDUs transmitted over the indirect link may also be transmitted over the direct link. In this case, the remote UE may use the temporal configuration the remote UE receives during initial setup until the remote UE receives a new RRCReconfiguration. In this case, as described above, mapping information between the indirect bearer and the direct bearer may be pre-allocated, and when RLF, and the like occur on one link, data transmitted through the link in which the RLF occurs may be transmitted through another link based on the mapping information. When the remote UE measures the signal strength (e.g., SD-RSRP) for the candidate relay UE before the SL RLF occurrs, the remote UE may also perform a measurement report when transmitting RRCReconfigruationRequest over the Uu link. As in the case of direct link RLF, the remote UE may also transmit the SL RLF over the direct link via other message formats. In this case, messages such as SUI/AUI may also be used.

Based on the relay UE detecting the RLF of the Uu link, the remote UE may receive a notification message (e.g., NotificationMessageSidelink) related to the RLF of the Uu link from the relay UE. Based on reception of the notification message, the remote UE may transmit a message notifying the RLF of the Uu link to the gNB through the first path. That is, when the relay UE detects Uu RLF, the relay UE may transmit a notification message to the remote UE, and the remote UE that receives the notification message may notify the gNB through the Uu direct link. In this case as well, when a (temporal) configuration is received considering the RLF case as described above, the remote UE may transmit data PDU through the configuration.

The remote UE may trigger relay re-selection based on reception of the notification message. That is, the remote UE that receives the Uu link RLF from the relay UE may trigger relay re-selection by notifying the gNB of this. The remote UE that receives the Uu link RLF from the relay UE may also notify the gNB of this via the SUI/AUI. Similarly, the remote UE may also transmit RRCReconfigurationRequest with RLF of the Uu link as the cause value.

When the remote UE activates a (temporal) configuration to be used when RLF occurs (e.g. RLF detect via direct/indirect link, or notification message received from relay UE), a separate signal may be required to notify the gNB of this. The corresponding signal may also be transmitted to the gNB via the SUI/AUI or the like.

When the remote UE receives a NotificationMessageSidelink message from the relay UE, the remote UE may notify the gNB through the direct link. In this case, the NotificationMessageSidelink may also be used to notify the gNB of the cause of the occurrence.

As another example, when the relay UE detects the SL RLF with the remote UE in the indirect link, the relay UE may notify the gNB of this via a Uu link of the relay UE. The gNB may perform a new RRCReconfiguration to force transmission only over the direct link when the remote UE transmits different data PDUs over the direct link and the indirect link. Alternatively, the remote UE does not detect the SL RLF (the relay UE detects the SL RLF), the gNB may notify the remote UE of the occurrence of the SL RLF through the direct link and trigger relay reselection. The gNB that receives the SL RLF as a report from the relay UE may also transmit a configuration to the relay UE that releases the related configuration.

When the indirect path of the remote UE is configured first and the direct path is configured, if the remote UE fails random access (including both contention base/contention free) or receives a reject message from the gNB, the remote UE may notify the gNB of this through the indirect path via the relay UE. Through this, the gNB may also determine that the remote UE is not capable of performing multi-path operations. In this case, the reason for failure may be notified to the gNB through the cause value.

In the above description, a remote UE device includes at least one processor; and at least one computer memory operably connected to the at least one processor and storing instructions that, when executed, cause the at least one processor to perform operations, the operations including establishing a radio resource control (RRC) connection with a base station (BS), establishing a PC5 RRC connection with a relay UE, and transmitting data to the BS via one path of i) a first path for transmitting data directly to the BS or ii) a second path for transmitting data to the Bs via the relay UE, wherein the remote UE reports the RLF to the BS via a message based on a Sidelink Signaling Radio Bearer via a path on which the RLF is not detected, based on detecting a radio link failure (RLF) in one of the first path and the second path.

As described above, when the remote UE activates both the direct path and the indirect path, the gNB needs to recognize the remote UE as the same UE whenever the corresponding remote UE uses the direct path or the indirect path. Hereinafter, embodiments of the present disclosure related thereto will be described.

When the remote UE performs RRCSetupRequest through the relay UE while having a direct connection first, the ID value of the remote UE used in the direct connection (e.g., C-RNTI/I-RNIT) is provided in the RRCReconfiguration-SetupRequest message and transmitted. Through this, the gNB may know that the remote UE is a UE that already establishes a connection via the direct link. The remote UE may transmit the (source (SRC)/destination (DST)) layer 2 ID (L2 ID) of the SL the remote UE establishes with the relay UE for multi-path along with the C-RNTI transmission. This is to ensure that when the remote UE already reports (SRC/DST) L2 ID thereof to the gNB via the direct link, the remote UE may also receive this via the indirect link to know for which SL the remote UE wants to configure a multi-path link.

When the remote UE wants to establish a direct connection to the gNB while already having an indirect connection, the remote UE may transmit a message requesting a direct connection to the gNB. The gNB may also transmit a preamble that allows contention free access to the gNB, while transmitting a message (e.g. RRCReconfiguration) allowing direct link to the remote UE. The remote UE that receives this may access the gNB in a contention free manner using the received preamble value. When allocating a preamble for a remote UE, the gNB stores mapping information related to which remote UE the preamble is previously allocated to, and may also allocate a C-RNTI value identical to the C-RNTI value allocated through the direct link to the remote UE that successfully accesses the preamble value.

Alternatively, when the remote UE attempts RACH via the direct path while maintaining the indirect path, the gNB may configure a new C-RNTI value for the remote UE attempting connection via the direct path. The remote UE assigned a new C-RNTI value may report the C-RNTI value used in the indirect path together with the newly allocated C-RNTI value to the gNB (via the indirect or direct link). The gNB receiving this may reconfigure the C-RNTI value to the remote UE (either the C-RNTI of the new or existing direct link or the C-RNTI of the indirect link). Through this, the gNB may also recognize that the UEs connected through the direct link and the indirect link are the same UE.

The remote UE that establishes an RRC connection with both the direct and an indirect link may be assigned different C-RNTI values for each link during the initial RRC connection setup. In this case, the remote UE may report two C-RNTI values allocated to the remote UE via direct (and/or indirect link), and the gNB receiving this may allocate a new C-RNTI value allocated by the gNB (enabling multi-path connection) to the remote UE via direct (and/or indirect link). Alternatively, the gNB may configure the remote UE to use only one of the pre-allocated C-RNTIs (or remove one of them), and thus the gNB may perceive the remote UE as a UE for both direct link and indirect link.

Alternatively, the remote UE assigned a C-RNTI through a direct link and another C-RNTI through the indirect link may notify the gNB that the two C-RNTIs are linked, and maintain the connection using each C-RNTI (two distinct C-RNTIs) through each link. The gNB is informed about a linkage relationship between the two C-RNTIs, and thus the gNB may recognize them as the same UE even if the information is transmitted via different C-RNTIs.

Examples of communication systems applicable to the present disclosure

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/-description, the same reference symbols may denote the same or corresponding hardware blocks, software blocks, or functional blocks unless described otherwise.

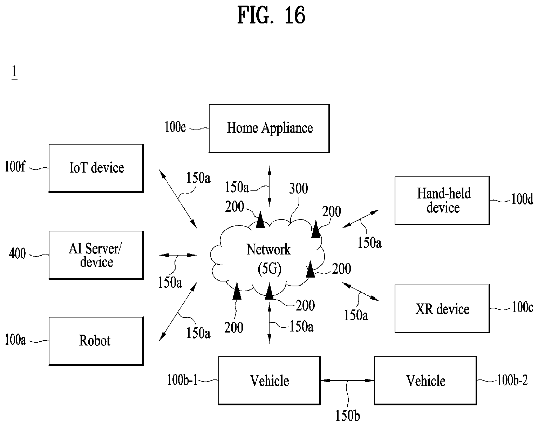

FIG. 16 illustrates a communication system 1 applied to the present disclosure.

Referring to FIG. 16, a communication system 1 applied to the present disclosure includes wireless devices, BSs, and a network. Herein, the wireless devices represent devices performing communication using RAT (e.g., 5G NR or LTE) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of things (IoT) device 100f, and an artificial intelligence (AI) device/server 400. For example, the vehicles may include a vehicle having a wireless communication function, an autonomous driving vehicle, and a vehicle capable of performing communication between vehicles. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. V2V/V2X communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as UL/DL communication 150a, sidelink communication 150b (or, D2D communication), or inter BS communication (e.g. relay, integrated access backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Examples of wireless devices applicable to the present disclosure

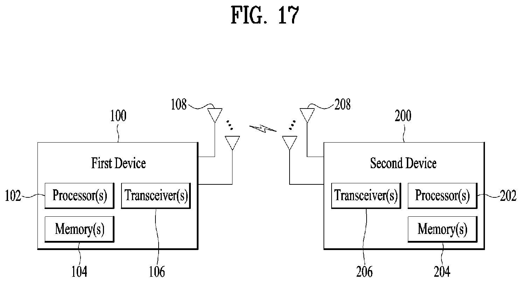

FIG. 17 illustrates wireless devices applicable to the present disclosure.

Referring to FIG. 17, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 16.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more service data unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

Examples of a vehicle or an autonomous driving vehicle applicable to the present disclosure

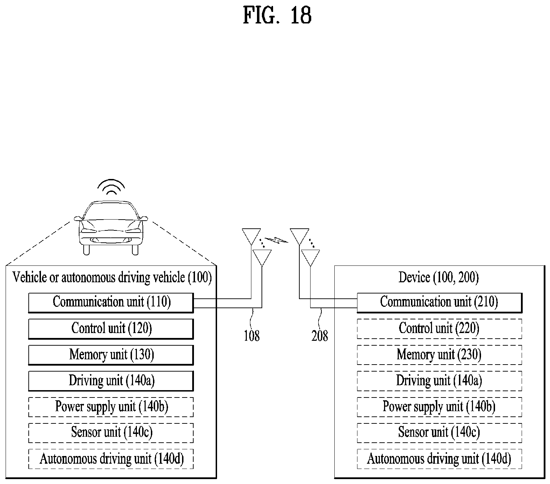

FIG. 18 illustrates a vehicle or an autonomous driving vehicle applied to the present disclosure. The vehicle or autonomous driving vehicle may be implemented by a mobile robot, a car, a train, a manned/unmanned aerial vehicle (AV), a ship, etc.

Referring to FIG. 18, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Examples of a vehicle and AR/VR applicable to the present disclosure

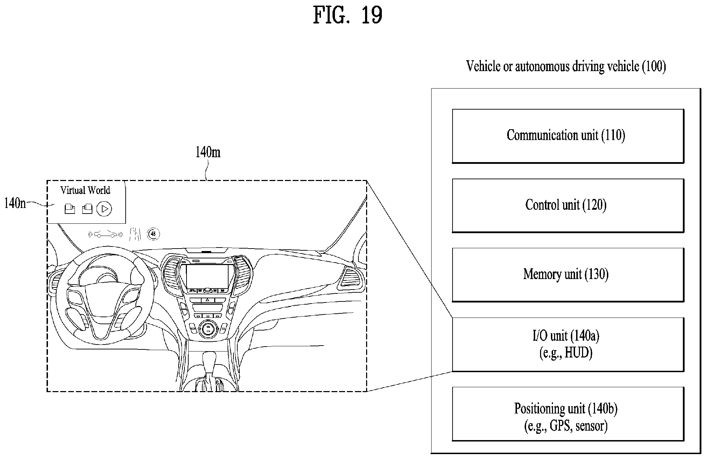

FIG. 19 illustrates a vehicle applied to the present disclosure. The vehicle may be implemented as a transport means, an aerial vehicle, a ship, etc.

Referring to FIG. 19, a vehicle 100 may include a communication unit 110, a control unit 120, a memory unit 130, an I/O unit 140a, and a positioning unit 140b.

The communication unit 110 may transmit and receive signals (e.g., data and control signals) to and from external devices such as other vehicles or BSs. The control unit 120 may perform various operations by controlling constituent elements of the vehicle 100. The memory unit 130 may store data/parameters/programs/code/commands for supporting various functions of the vehicle 100. The I/O unit 140a may output an AR/VR object based on information within the memory unit 130. The I/O unit 140a may include an HUD. The positioning unit 140b may acquire information about the position of the vehicle 100. The position information may include information about an absolute position of the vehicle 100, information about the position of the vehicle 100 within a traveling lane, acceleration information, and information about the position of the vehicle 100 from a neighboring vehicle. The positioning unit 140b may include a GPS and various sensors.

As an example, the communication unit 110 of the vehicle 100 may receive map information and traffic information from an external server and store the received information in the memory unit 130. The positioning unit 140b may obtain the vehicle position information through the GPS and various sensors and store the obtained information in the memory unit 130. The control unit 120 may generate a virtual object based on the map information, traffic information, and vehicle position information and the I/O unit 140a may display the generated virtual object in a window in the vehicle (1410 and 1420). The control unit 120 may determine whether the vehicle 100 normally drives within a traveling lane, based on the vehicle position information. If the vehicle 100 abnormally exits from the traveling lane, the control unit 120 may display a warning on the window in the vehicle through the I/O unit 140a. In addition, the control unit 120 may broadcast a warning message regarding driving abnormity to neighboring vehicles through the communication unit 110. According to situation, the control unit 120 may transmit the vehicle position information and the information about driving/vehicle abnormality to related organizations.

Examples of an XR device applicable to the present disclosure

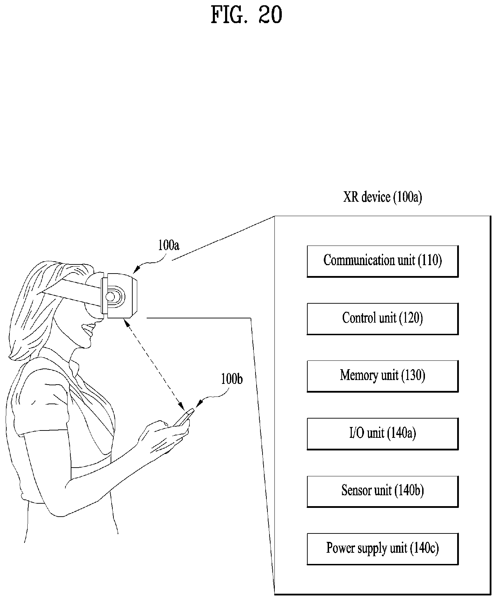

FIG. 20 illustrates an XR device applied to the present disclosure. The XR device may be implemented by an HMD, an HUD mounted in a vehicle, a television, a smartphone, a computer, a wearable device, a home appliance, a digital signage, a vehicle, a robot, etc.

Referring to FIG. 20, an XR device 100a may include a communication unit 110, a control unit 120, a memory unit 130, an I/O unit 140a, a sensor unit 140b, and a power supply unit 140c.

The communication unit 110 may transmit and receive signals (e.g., media data and control signals) to and from external devices such as other wireless devices, hand-held devices, or media servers. The media data may include video, images, and sound. The control unit 120 may perform various operations by controlling constituent elements of the XR device 100a. For example, the control unit 120 may be configured to control and/or perform procedures such as video/image acquisition, (video/image) encoding, and metadata generation and processing. The memory unit 130 may store data/parameters/programs/code/commands needed to drive the XR device 100a/generate XR object. The I/O unit 140a may obtain control information and data from the exterior and output the generated XR object. The I/O unit 140a may include a camera, a microphone, a user input unit, a display unit, a speaker, and/or a haptic module. The sensor unit 140b may obtain an XR device state, surrounding environment information, user information, etc. The sensor unit 140b may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone and/or a radar. The power supply unit 140c may supply power to the XR device 100a and include a wired/wireless charging circuit, a battery, etc.

For example, the memory unit 130 of the XR device 100a may include information (e.g., data) needed to generate the XR object (e.g., an AR/VR/MR object). The I/O unit 140a may receive a command for manipulating the XR device 100a from a user and the control unit 120 may drive the XR device 100a according to a driving command of a user. For example, when a user desires to watch a film or news through the XR device 100a, the control unit 120 transmits content request information to another device (e.g., a hand-held device 100b) or a media server through the communication unit 130. The communication unit 130 may download/stream content such as films or news from another device (e.g., the hand-held device 100b) or the media server to the memory unit 130. The control unit 120 may control and/or perform procedures such as video/image acquisition, (video/image) encoding, and metadata generation/processing with respect to the content and generate/output the XR object based on information about a surrounding space or a real object obtained through the I/O unit 140a/sensor unit 140b.

The XR device 100a may be wirelessly connected to the hand-held device 100b through the communication unit 110 and the operation of the XR device 100a may be controlled by the hand-held device 100b. For example, the hand-held device 100b may operate as a controller of the XR device 100a. To this end, the XR device 100a may obtain information about a 3D position of the hand-held device 100b and generate and output an XR object corresponding to the hand-held device 100b.

Examples of a robot applicable to the present disclosure

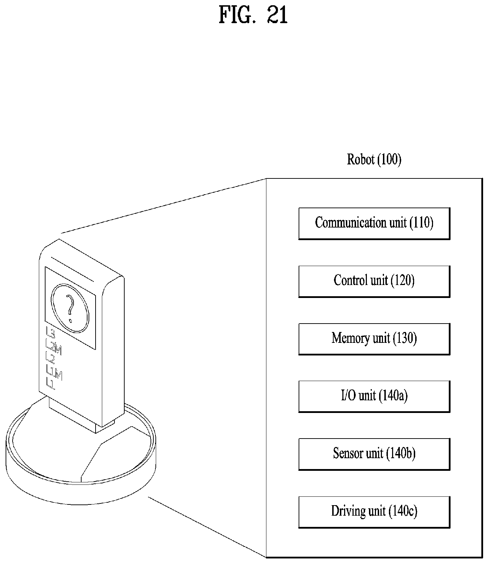

FIG. 21 illustrates a robot applied to the present disclosure. The robot may be categorized into an industrial robot, a medical robot, a household robot, a military robot, etc., according to a used purpose or field.

Referring to FIG. 21, a robot 100 may include a communication unit 110, a control unit 120, a memory unit 130, an I/O unit 140a, a sensor unit 140b, and a driving unit 140c. Herein, the blocks 110 to 130/140a to 140c correspond to the blocks 110 to 130/140 of FIG. 17, respectively.

The communication unit 110 may transmit and receive signals (e.g., driving information and control signals) to and from external devices such as other wireless devices, other robots, or control servers. The control unit 120 may perform various operations by controlling constituent elements of the robot 100. The memory unit 130 may store data/parameters/programs/code/commands for supporting various functions of the robot 100. The I/O unit 140a may obtain information from the exterior of the robot 100 and output information to the exterior of the robot 100. The I/O unit 140a may include a camera, a microphone, a user input unit, a display unit, a speaker, and/or a haptic module. The sensor unit 140b may obtain internal information of the robot 100, surrounding environment information, user information, etc. The sensor unit 140b may include a proximity sensor, an illumination sensor, an acceleration sensor, a magnetic sensor, a gyro sensor, an inertial sensor, an IR sensor, a fingerprint recognition sensor, an ultrasonic sensor, a light sensor, a microphone, a radar, etc. The driving unit 140c may perform various physical operations such as movement of robot joints. In addition, the driving unit 140c may cause the robot 100 to travel on the road or to fly. The driving unit 140c may include an actuator, a motor, a wheel, a brake, a propeller, etc.

Example of AI device to which the present disclosure is applied.

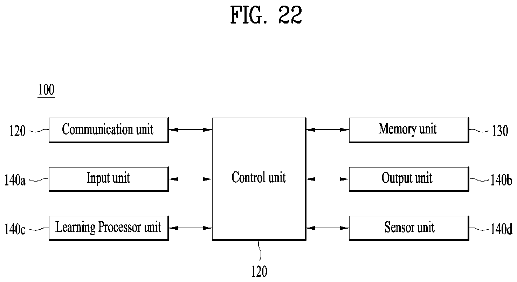

FIG. 22 illustrates an AI device applied to the present disclosure. The AI device may be implemented by a fixed device or a mobile device, such as a TV, a projector, a smartphone, a PC, a notebook, a digital broadcast terminal, a tablet PC, a wearable device, a Set Top Box (STB), a radio, a washing machine, a refrigerator, a digital signage, a robot, a vehicle, etc.

Referring to FIG. 22, an AI device 100 may include a communication unit 110, a control unit 120, a memory unit 130, an I/O unit 140a/140b, a learning processor unit 140c, and a sensor unit 140d. The blocks 110 to 130/140a to 140d correspond to blocks 110 to 130/140 of FIG. 17, respectively.

The communication unit 110 may transmit and receive wired/radio signals (e.g., sensor information, user input, learning models, or control signals) to and from external devices such as other AI devices (e.g., 100x, 200, or 400 of FIG. 16) or an AI server (e.g., 400 of FIG. 16) using wired/wireless communication technology. To this end, the communication unit 110 may transmit information within the memory unit 130 to an external device and transmit a signal received from the external device to the memory unit 130.

The control unit 120 may determine at least one feasible operation of the AI device 100, based on information which is determined or generated using a data analysis algorithm or a machine learning algorithm. The control unit 120 may perform an operation determined by controlling constituent elements of the AI device 100. For example, the control unit 120 may request, search, receive, or use data of the learning processor unit 140c or the memory unit 130 and control the constituent elements of the AI device 100 to perform a predicted operation or an operation determined to be preferred among at least one feasible operation. The control unit 120 may collect history information including the operation contents of the AI device 100 and operation feedback by a user and store the collected information in the memory unit 130 or the learning processor unit 140c or transmit the collected information to an external device such as an AI server (400 of FIG. 16). The collected history information may be used to update a learning model.

The memory unit 130 may store data for supporting various functions of the AI device 100. For example, the memory unit 130 may store data obtained from the input unit 140a, data obtained from the communication unit 110, output data of the learning processor unit 140c, and data obtained from the sensor unit 140. The memory unit 130 may store control information and/or software code needed to operate/drive the control unit 120.

The input unit 140a may acquire various types of data from the exterior of the AI device 100. For example, the input unit 140a may acquire learning data for model learning, and input data to which the learning model is to be applied. The input unit 140a may include a camera, a microphone, and/or a user input unit. The output unit 140b may generate output related to a visual, auditory, or tactile sense. The output unit 140b may include a display unit, a speaker, and/or a haptic module. The sensing unit 140 may obtain at least one of internal information of the AI device 100, surrounding environment information of the AI device 100, and user information, using various sensors. The sensor unit 140 may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone, and/or a radar.

The learning processor unit 140c may learn a model consisting of artificial neural networks, using learning data. The learning processor unit 140c may perform AI processing together with the learning processor unit of the AI server (400 of FIG. 16). The learning processor unit 140c may process information received from an external device through the communication unit 110 and/or information stored in the memory unit 130. In addition, an output value of the learning processor unit 140c may be transmitted to the external device through the communication unit 110 and may be stored in the memory unit 130.

[Industrial Applicability]

The above-described embodiments of the present disclosure are applicable to various mobile communication systems.

**Claims**

1. An operating method of a user equipment (UE) in a wireless communication system, the method comprising:

   establishing a radio resource control (RRC) connection with a base station (BS) by the remote UE;
   establishing a PC5 RRC connection with a relay UE by the remote UE;
   transmitting data to the BS via one path of i) a first path for transmitting data directly to the BS or ii) a second path for transmitting data to the BS via the relay UE, by the remote UE,
   wherein, based on detecting radio link failure (RLF) in either of the first path and the second path, the remote UE reports the RLF to the BS through a message based on a Sidelink Signaling Radio Bearer through a path in which the RLF is not detected.

2. The method of claim 1, wherein the SRB is SRB 1 and the message is SidelinUEInformation.

3. The method of claim 1, wherein the SRB is SRB 3 and the message is RRCReconfigurationRequest.

4. The method of claim 3, wherein a cause value of the RRCReconfigurationRequest message is Uu link RLF.

5. The method of claim 1, wherein both the first path and the second path are activated.

6. The method of claim 5, whereinthe remote UE transmits different data on the first path and the second path before detecting the RLF.

7. The method of claim 6, wherein the remote UE transmits all subsequent data of the different data through the path in which the RLF is not detected.

8. The method of claim 1, wherein, based on detecting the RLF of Uu link related to the first path, the remote UE reports the RLF of the Uu link to the BS through the second path.

9. The method of claim 1, wherein, based on detecting the RLF of sidelink related to the second path, the remote UE reports the RLF of the sidelink to the BS through the first path.

10. The method of claim 1, wherein, based on the relay UE detecting the RLF of the Uu link, the remote UE receives a notification message related to the RLF of the Uu link from the relay UE.

11. The method of claim 10, wherein, based on reception of the notification message, the remote UE transmits a message notifying the RLF of the Uu link to the BS through the first path.

12. The method of claim 11, wherein the remote UE triggers relay re-selection based on reception of the notification message.

13. A remote user equipment (UE) device in a wireless communication system, the remote UE device comprising:

    at least one processor; and
    at least one computer memory operably connected to the at least one processor and configured to store instructions that, when executed, cause the at least one processor to perform operations including:

        establishing a radio resource control (RRC) connection with a base station (BS);
        establishing a PC5 RRC connection with a relay UE; and
        transmitting data to the BS via one path of i) a first path for transmitting data directly to the BS or ii) a second path for transmitting data to the BS via the relay UE,
        wherein, based on detecting radio link failure (RLF) in either of the first path and the second path, the remote UE reports the RLF to the BS through a message based on a Sidelink Signaling Radio Bearer through a path in which the RLF is not detected.

FIG. 1

FIG. 2

FIG. 3

(b)

(a)

# FIG. 4

# FIG. 5

| gNB |
|---|
| Inter-Cell RRM |
| RB Control |
| Connection Mobility Control |
| Radio Access Control |
| Measurement Configuration and Provisioning |
| Dynamic Resource Allocation (Scheduler) |

NG-RAN

| AMF |
|---|
| NAS Security |
| Idle-State Mobility Processing |

| SMF |
|---|
| UE IP Address Allocation |
| PDU Session Control |

| UPF |
|---|
| Mobility Anchoring |
| PDU Processing |

5GC

Internet

## FIG. 6

| | One Frame (10ms) | |
|---|---|---|
| . . . | | . . . |

| | Half-Frame (5ms) | Half-Frame (5ms) | |
|---|---|---|---|
| . . . | | | . . . |

| | Subframe 0 (1ms) | | Subframe 4 (1ms) | Subframe 5 (1ms) | | Subframe 9 (1ms) | |
|---|---|---|---|---|---|---|---|
| . . . | | . . . | | | . . . | | . . . |

Subframe (1ms)

**15KHz** | Slot 0 (14symbols)

1ms

**30KHz** | Slot 0 (14symbols) | Slot 1

500us

**60KHz** | Slot 0 (14symbols) | Slot 1 | Slot 2 | Slot 3

250us

**120KHz** | Slot 0 (14symbols) | Slot 1 | Slot 2 | Slot 3 | Slot 4 | Slot 5 | Slot 6 | Slot 7

125us

# FIG. 7

# FIG. 8

PU5-U

(a)

PU5-C

(b)

# FIG. 9

UE A

SDAP

PDCP

RLC

MAC

PHY

UE B

SDAP

PDCP

RLC

MAC

PHY

PU5-U

(a)

UE A

RRc

PDCP

RLC

MAC

PHY

UE B

RRC

PDCP

RLC

MAC

PHY

PU5-U

(b)

**FIG. 10**

GNSS

Directly Synchronized with BS

BS

Directly Synchronized with GNSS
(In Coverage)

Directly Synchronized
with GNSS  (Out Coverage)

Network Coverage

Indirectly Synchronized with BS

Indirectly Synchronized with GNSS

Independent Synchronization Source

## FIG. 11

BS | UE1 | UE2

S8000 — Resource Scheduling

PSCCH — S8010

PSSCH — S8020

PSFCH — S8030

S8040 — PUCCH/PUSCH

(a)

UE1 | UE2

PSCCH — S8010

PSSCH — S8020

PSFCH — S8030

(b)

FIG. 12

| Remote UE | Relay UE | gNB |

S1200 — Discovery

S1201 — PC5 Connection Establishment

S1202 — RRC Setup Request

S1203 — RRC Setup

S1204 — Prepare PC5 and Uu RLC channel for SRB1

S1205 — RRC Setup Complete

S1206 — Security Mode Command

S1207 — Security Mode Complete

S1208 — RRC Reconfiguration

S1209 — RR Reconfiguration Complete

S1210 — Prepare PC5 and Uu RLC channel for SRB2/DRB

FIG. 13

| Remote UE | Relay UE | gNB |

S1300    UL/DL data

S1301    Measurement configuration and reporting

S1302    Decision of switching to a target relay UE

S1203    RRC Reconfiguration and RRC Reconfiguration Complete Message

S1304    RRC Reconfiguration message

S1305    PC5 connection establishment, if not exist

S1306    RRC Reconfiguration Complete Message

S1307    UL/DL data

FIG. 14

gNB

Remote UE

Relay UE

FIG. 15

Establish RRC with BS — S1501

Establish PC5 connection with relay UE — S1502

Transmit data to BS via one path of i) first path for transmitting data directly to BS or ii) second path for transmitting data to BS via relay UE — S1503

## FIG. 16

<u>1</u>

# FIG. 17

FIG. 18

| Vehicle or autonomous driving vehicle (100) | | Device (100, 200) |
|---|---|---|
| Communication unit (110) | | Communication unit (210) |
| Control unit (120) | | Control unit (220) |
| Memory unit (130) | | Memory unit (230) |
| Driving unit (140a) | | Driving unit (140a) |
| Power supply unit (140b) | | Power supply unit (140b) |
| Sensor unit (140c) | | Sensor unit (140c) |
| Autonomous driving unit (140d) | | Autonomous driving unit (140d) |

108     208

# FIG. 19

Vehicle or autonomous driving vehicle (100)

140m

Virtual World

140n

| Communication unit (110) |
| Control unit (120) |
| Memory unit (130) |
| I/O unit (140a) (e.g., HUD) |
| Positioning unit (140b) (e.g., GPS, sensor) |

EP 4 518 564 A1

# FIG. 20

XR device (100a)

100a

100b

Communication unit (110)

Control unit (120)

Memory unit (130)

I/O unit (140a)

Sensor unit (140b)

Power supply unit (140c)

# FIG. 21

Robot (100)

Communication unit (110)

Control unit (120)

Memory unit (130)

I/O unit (140a)

Sensor unit (140b)

Driving unit (140c)

# FIG. 22

100

| 120 — Communication unit | ↔ | | ↔ | Memory unit — 130 |
|---|---|---|---|---|

Control unit

| 140a — Input unit | ↔ | | ↔ | Output unit — 140b |
|---|---|---|---|---|

| 140c — Learning Processor unit | ↔ | | ↔ | Sensor unit — 140d |
|---|---|---|---|---|

120

<div align="center">

**INTERNATIONAL SEARCH REPORT**

</div>

| | International application No. |
|---|---|
| | **PCT/KR2023/005784** |

**A. CLASSIFICATION OF SUBJECT MATTER**

**H04W 76/18**(2018.01)i; **H04W 24/08**(2009.01)i; **H04W 24/10**(2009.01)i; **H04W 36/00**(2009.01)i; **H04W 40/22**(2009.01)i; **H04W 88/04**(2009.01)i; **H04W 76/19**(2018.01)i; **H04W 92/10**(2009.01)i; **H04W 92/18**(2009.01)i

According to International Patent Classification (IPC) or to both national classification and IPC

**B. FIELDS SEARCHED**

Minimum documentation searched (classification system followed by classification symbols)

H04W 76/18(2018.01); H04W 4/40(2018.01); H04W 40/22(2009.01); H04W 76/14(2018.01); H04W 76/19(2018.01); H04W 76/23(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PC5 라디오 링크 실패(RLF), Uu 링크(link) RLF, RRC 재구성(reconfiguration), 사이드링크(sidelink)

**C. DOCUMENTS CONSIDERED TO BE RELEVANT**

| Category* | Citation of document, with indication, where appropriate, of the relevant passages | Relevant to claim No. |
|---|---|---|
| X<br>Y | MEDIATEK INC. Introduction of Rel-17 Sidelink Relay. R2-2201725, 3GPP TSG-RAN WG2 Meeting #116bis Electronic, Online Meeting. 31 January 2022.<br>See sections 16.x.4, 16.x.5.1, 16.x.5.2, 16.x.5.4, 16.x.6.1 and 16.x.6.2. | 1-5,8-13<br>6-7 |
| Y | WO 2021-207505 A1 (IDAC HOLDINGS, INC.) 14 October 2021 (2021-10-14)<br>See paragraph [0170]. | 6-7 |
| A | WO 2022-032034 A1 (IDAC HOLDINGS, INC.) 10 February 2022 (2022-02-10)<br>See paragraphs [0152]-[0195]; and figure 6. | 1-13 |
| A | WO 2022-080702 A1 (LG ELECTRONICS INC.) 21 April 2022 (2022-04-21)<br>See claims 1-6. | 1-13 |
| A | KR 10-2021-0047241 A (LG ELECTRONICS INC.) 29 April 2021 (2021-04-29)<br>See claims 1-7. | 1-13 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 August 2023** | **09 August 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/005784**

| Patent document cited in search report | | | Publication date (day/month/year) | Patent family member(s) | | | Publication date (day/month/year) |
|---|---|---|---|---|---|---|---|
| WO | 2021-207505 | A1 | 14 October 2021 | BR | 112022020404 | A2 | 20 December 2022 |
| | | | | CN | 115553058 | A | 30 December 2022 |
| | | | | EP | 4133900 | A1 | 15 February 2023 |
| | | | | IL | 297151 | A | 01 December 2022 |
| | | | | KR | 10-2023-0008722 | A | 16 January 2023 |
| | | | | US | 2023-0180313 | A1 | 08 June 2023 |
| WO | 2022-032034 | A1 | 10 February 2022 | BR | 112023002096 | A2 | 11 April 2023 |
| | | | | CN | 116114370 | A | 12 May 2023 |
| | | | | EP | 4193683 | A1 | 14 June 2023 |
| WO | 2022-080702 | A1 | 21 April 2022 | KR | 10-2023-0084515 | A | 13 June 2023 |
| KR | 10-2021-0047241 | A | 29 April 2021 | CN | 112770290 | A | 07 May 2021 |
| | | | | EP | 3813480 | A1 | 28 April 2021 |
| | | | | JP | 2021-069106 | A | 30 April 2021 |
| | | | | JP | 7136848 | B2 | 13 September 2022 |
| | | | | US | 2021-0120625 | A1 | 22 April 2021 |
| | | | | WO | 2021-080120 | A1 | 29 April 2021 |

Form PCT/ISA/210 (patent family annex) (July 2022)